# EUROPEAN PATENT APPLICATION

(11) **EP 1 586 992 A2**
(43) Date of publication of application: **19.10.2005**
(21) Application number: 05007683.5
(22) Date of filing: 07.04.2005
(51) Int. Cl.: G06F 9/44

(54) **Template for generating user interfaces**

(30) Priority: 15.04.2004 US 825565
(71) Applicant: SAP AG, 69190 Walldorf (DE)
(72) Inventor: Arend, Udo, 69126 Heidelberg (DE); Hilgers, Peer, 68789 St. Leon-Rot. (DE); Bombolowsky, Jens, 68723 Schweitzingen (DE); Willumeit, Heinz, 68789 St.Leon -Rot. (DE); Eberleh, Edmund, 68789 St. Leon-Rot. (DE); Harbusch, Matthias, 76669 Bad Schönborn (DE)
(74) Representative: Müller-Boré & Partner Patentanwälte

(57) **Abstract**

A user interface template for generating a computer user interface through which a user may perform a task. The user interface template includes a window on a computer screen comprising: a first pane displaying two or more view selection links, the first pane having one of the two or more view selection links selected at any point in time; a second pane displaying one content pattern selected from two or more content patterns, wherein the two or more content patterns are associated with the respective two or more view selection links and wherein the one content pattern selected is selected based on the selected one of the two or more view selection links; and a third pane displaying one or more links to activities that are directly related to the one content pattern selected from the two or more content patterns but that are not directly related to the task.

## Description

### TECHNICAL FIELD

This invention relates generally to computer system user interfaces, and more specifically to methods and systems for providing object instance floorplans for designing a user interface.

### BACKGROUND

In today's business environment, employees often must resort to many sources of information and means of communication to effectively perform tasks as part of their responsibilities. Increasingly, those tasks require receiving, locating, editing, or creating information using computer programs.

One group of programs help create or maintain what may be called knowledge or content management. These programs may include software for email, word processing, accounting, presentation, and scheduling, such as Microsoft Outlook, Word, PowerPoint, Excel, Lotus Notes, Lotus Organizer, and Adobe Acrobat. Typically, these programs are based on a user's personal computer or a local server. They often result in "loose" files that are personal to the individual who creates them.

Certain business roles also require accessing or manipulating data stored in large databases, such as enterprise solution software. These enterprise packages provide a single entry point to all information, applications, and services that people need to do their jobs according to their role in the organization. They provide a way for suppliers, customers, partners, and employees to access all relevant content easily and securely and to participate in all types of business processes. Since information and applications are unified, users can identify and address business issues faster, more effectively, and at a lower cost. Specific enterprise solutions may exist for assisting the company with enterprise resource planning, customer resource management, human resource management, and supply chain management, to name a few.

An example of an enterprise solution is the R/3 System from SAP AG. R/3 can be described primarily as an online transaction processing system designed to provide integrated processing of all business routines and transactions. It includes enterprise-wide, integrated solutions, as well as specialized applications for individual, departmental functions. R/3 mirrors all of the business-critical processes of the enterprise―finance, manufacturing, sales, and human resources. It also offers various analytical capabilities to supplement the transaction processing function. The R/3 System is based on SAP's client/server architecture which separates the database, application, and presentation components for greater flexibility. This enables enterprises to take advantage of the various benefits of the architecture, including the capability to run across a variety of today's most popular UNIX-based hardware platforms.

Faced with a gamut of applications and files, such as knowledge management files and enterprise solution data, an individual can waste valuable time navigating through each program to create or access needed information for solving a task. Most of the resources are designed to be accessed independently and one at a time. Moreover, the user interfaces on many of them require understanding complex forms and functions. Often they require users to maneuver up and down complex structure of "trees" to find or modify the information that they want to view. Costs for training people in how to operate the software are often significant. On the other hand, some systems provide a simple user interfaces to their users to work in complex computer systems. But as the users become more experienced with the systems, these simple user interfaces become less helpful and more tedious.

Not only do individuals often need to juggle a vast assortment of software resources to perform tasks, but also they must proactively "pull," i.e., locate and retrieve, the information from the resources. Consequently, to effectively manage the software tools at their disposal, workers must both know how to navigate through each program and know where data is located that is necessary for a task. Even with this knowledge, users must often wade through vast amounts of extraneous information to get to the data that is needed. They rarely, however, need the full resources or depth of information available. Therefore, in the current computing environment, business users may spend an inordinate amount of time accessing and manipulating data in the course of fulfilling their responsibilities.

### SUMMARY

A user interface template for generating a computer user interface through which a user may perform a task is provided. The user interface template includes a window on a computer screen comprising: a first pane displaying two or more view selection links, the first pane having one of the two or more view selection links selected at any point in time; a second pane displaying one content pattern selected from two or more content patterns, wherein the two or more content patterns are associated with the respective two or more view selection links and wherein the one content pattern selected is selected based on the selected one of the two or more view selection links; and a third pane displaying one or more links to activities that are directly related to the one content pattern selected from the two or more content patterns but that are not directly related to the task.

Furthermore, a system for generating a computer user interface through which a user may perform a task is provided. The user interface template includes a window on a computer screen including a first pane, a second pane, and a third pan. The system comprises: a memory; and a microprocessor in communication with the memory and programmed to: display two or more view selection links in the first pane, the first pane having one of the two or more view selection links selected at any point in time; displaying one content pattern selected from two or more content patterns in the second pane, wherein the two or more content patterns are associated with the respective two or more view selection links and wherein the one content pattern selected is selected based on the selected one of the two or more view selection links; and displaying, in the third pane, one or more links to activities that are directly related to the one content pattern selected from the two or more content patterns but that are not directly related to the task.

The foregoing background and summary are not intended to be comprehensive, but instead serve to help artisans of ordinary skill understand the following implementations consistent with the invention set forth in the appended claims. In addition, the foregoing background and summary are not intended to provide any independent limitations on the claimed invention.

### BRIEF DESCRIPTION OF THE DRAWINGS

The accompanying drawings show features of implementations consistent with the present invention and, together with the corresponding written description, help explain principles associated with the invention. In the drawings:

Figure 1 is a functional diagram of an exemplary division of computer resources for providing this progressive disclosure.

Figure 2 is functional diagram of an operating system's desktop featuring quick activities, activity scouts, and guided activities.

Figure 3 is a screen shot of an exemplary desktop including exemplary user interface features.

Figure 4 is a screen shot of an exemplary desktop including a contextual menu that may be brought up by a user in response to an alert or notification.

Figure 5 is an exemplary quick activity floorplan for a quick activity window.

Figure 6 is a screen shot of an examplary quick activity window.

Figure 7 is an exemplary activity scout floorplan for an activity scout window.

Figure 8 is a screen shot of an exemplary activity scout.

Figure 9 is a screen shot of another aspect of the exemplary activity scout of Figure 8.

Figure 10 is an exemplary guided activity floorplan for a guided activity window.

Figure 11 is functional diagram of a plurality of guided activity floorplans for an exemplary five-step guided activity sequence.

Figure 12 is a screen shot of step one of an exemplary five-step sourcing guided activity window.

Figure 13 is a screen shot of step two of an exemplary five-step sourcing guided activity window.

Figure 14 is a screen shot of step three of an exemplary five-step sourcing guided activity window.

Figure 15a is the screen shot of step three including a contextual pop-up menu that the user may engage to modify the five-step sourcing guided activity window.

Figure 15b is the screen shot of step three after the user has selected, from the contextual pop up menu, to "Show Criteria for Suppliers" as a related action.

Figure 16 is a screen shot of step four of an exemplary five-step sourcing guided activity window.

Figure 17 is a screen shot of step five of an exemplary five-step sourcing guided activity window.

Figure 18 is the screen shot of Figure 12 including a contextual menu that a user may bring up to merge steps within a guided activity window.

Figure 19a is a screen shot illustrating the results of selecting merge steps in the contextual menu of Figure 18.

Figure 19b is a screen shot illustrating a contextual pop-up menu that the user may engage to change the representation of the user interface that causes changes in the functioning of the underlying application.

Figure 20 is a functional diagram showing exemplary screen shots and the progressive disclosure of information to the user.

Figure 21 is a flowchart of an exemplary method of progressive disclosure.

Figure 22 is a block diagram of components of an exemplary client system and server system.

Figure 23 is an exemplary non-guided object instance floorplan 2300.

Figure 24 illustrates a plurality of exemplary content patterns that may be used in the object instance floorplan.

Figure 25 illustrates an exemplary object instance floorplan with two exemplary content patterns displayed in content area.

Figure 26 is an illustration of the relationship between the content of contextual navigation pattern and other actions and displays.

Figure 27 is an exemplary viewset selection area.

Figure 28 is an exemplary related activities area.

Figure 29 is an exemplary lookup area.

Figure 30 illustrates the search options in an exemplary lookup area.

### DETAILED DESCRIPTION

The following description refers to the accompanying drawings in which, in the absence of a contrary representation, the same numbers in different drawings represent similar elements. The implementations in the following description do not represent all implementations consistent with principles of the claimed invention. Instead, they are merely some examples of systems and methods consistent with those principles.

As embodied herein, a user interface having incremental or progressive disclosure of information provides an efficient vehicle for guiding a computer user through large quantities of data. Conventional user interfaces, particularly for enterprise solutions, often force a user to sort through extensive databases or tree-like file structures to "pull," or find, data in a computer system. Given the complexity of data and files for a large enterprise or business function, finding or editing the desired information can be a daunting task. The present user interface, however, "pushes," or presents, selected information to the user. Accordingly, a user interface consistent with the principles of the present invention provides information to the user based on tasks and events that the user needs to accomplish or monitor. As a result, the user's work is simplified. He can spend more time using the computer system to monitor a business situation and less time entering data or attempting to retrieve information needed to make decisions.

For improved functionality, the present user interface may be adapted for a user based on his role in an organization. Generally, a user's role refers to his position or responsibilities. For example, a person in the role of a purchasing agent for a manufacturing company may have the responsibility for procuring raw materials. Tasks affiliated with that role may include issuing purchase orders to suppliers, negotiating changes to existing purchase orders, and monitoring delivery of the materials. The information "pushed" to the purchasing agent to accomplish these tasks via the present user interface may include, for example, data on the status of existing purchase orders, profiles of preferred suppliers, and delivery schedules. Other users with common roles may perform similar tasks and may have a customized user interface similar to the purchasing agent's. In the end, a user interface consistent with the present invention may take many forms and is designed to empower each user to complete the tasks required by his role in the organization in the most streamlined fashion.

In addition to pushing selected data to a user, a preferred user interface exposes the user to data in tiers of escalating complexity or breadth. This is also known as progressive disclosure. At first, the user interface provides a minimal amount of information deemed necessary for the user to solve a task. If the user requires more information, the user interface progressively provides that information. Thus, when aspects of the disclosed user interface are placed together within a system, they provide an escalating approach to solving tasks. By presenting the user with only the most likely information needed to perform the task or event, allowing the user access to further information as requested, and guiding the user through task completion, the present user interface can reduce the time required for the user to complete the task while making it easier to do so.

Moreover, user interfaces designed consistent with the present disclosure may be customized. While the user interface aims to protect the user from information extraneous to the task at hand, what information is extraneous will depend at least on the user and his level of familiarity with the data and the system. As users become more proficient with the system, the present disclosure contemplates that users may reduce the level of guidance provided by the interface. Thus, user interfaces designed according to the teachings of the disclosure provide simple, low-level guidance to new users, allowing the user to tailor the system as his experience increases.

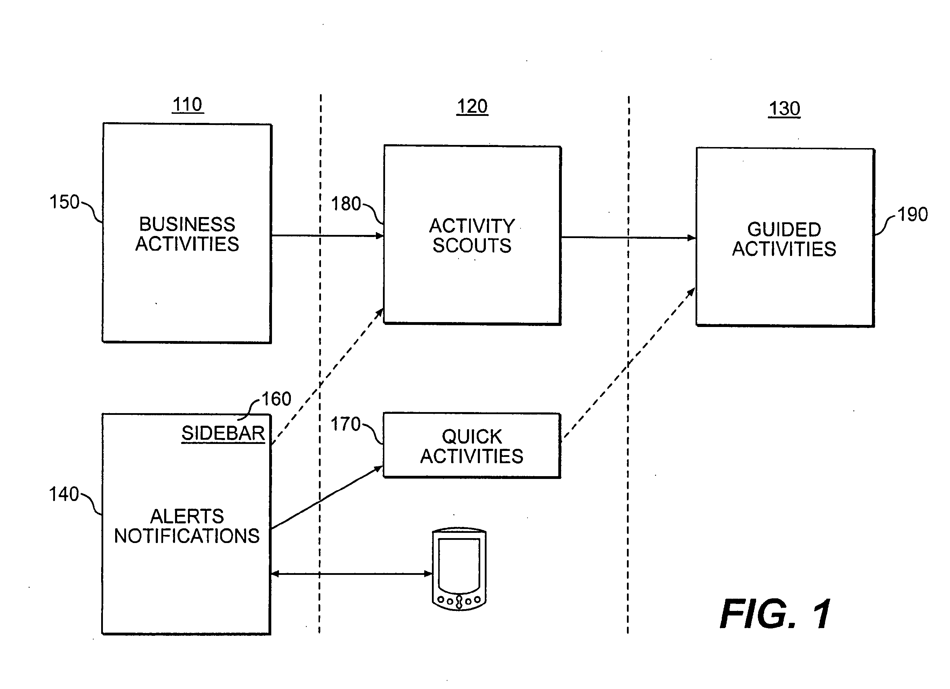

As embodied herein, a user interface consistent with the present teachings accesses different resources of the computer system at different tiers of the progressive disclosure in helping the user monitor events or perform a task. Figure 1 illustrates an exemplary division of computer resources for providing this progressive disclosure. In this example, the user interface divides the computer's software resources into three areas: the operating system of the personal computer 110, small application programs 120, and enterprise solution portal 130.

For monitoring events and performing relatively simple tasks, the operating system 110 of the user's personal computer can be used. As explained in more detail below, this operating system, such as a version of Microsoft Windows, may provide alerts or notifications 140 to the user via some aspect of the user's "desktop" 150. For a Windows Longhorn desktop, one aspect may be a side bar 160. These alerts inform the user of a particular situation that may be pertinent to performing his role.

For performing fairly simple and semi-automated tasks, small application programs 120 may provide a streamlined resource. In general terms, applications 120 provide the 20% of the information that typically is necessary to solve 80% of the user's tasks. As shown in Figure 1, a user may access applications 120 directly from his computer desktop 150 or by responding to an alert on side bar 160. Applications 120 may access data from a complex enterprise solution, but preferably they shield the user from having to navigate the enterprise database. As explained further below, applications 120 typically appear as a window on the desktop and allow immediate task completion. As well, applications 120 may enable the user to navigate to more powerful tools and applications, and offer links to other related applications for semi-automated tasks. In the embodiments described herein, examples of applications 120 are quick activities 170 and activity scouts 180. As also shown in Figure 1, a portable computing device, or PDA, may provide the capability of executing small applications 120 and linking the user interface through a personal computer desktop, such as through side bar 160.

Still referring to Figure 1, an enterprise solution portal 130 provides the user with highly advanced databases and information for solving complex tasks. These solutions may include, for example, SAP's R/3 for enterprise resource planning. Consistent with the principles of progressive disclosure, the user typically does not need to access enterprise solution portal 130 unless the previous tiers of information have proved insufficient to solve the task at hand. Within portal 130, however, the present user interface provides improved navigation using guided activity windows 190, where are described more fully below. As shown in Figure 1, the user preferably accesses guided activities 190 via quick activities 170 and activity scouts 180.

The three basic levels of disclosure via sections 110, 120, and 130 are only exemplary. The present invention may be performed using less than or more than three levels or tiers.

Moreover, each of the previously described components―alerts 140, quick activities 170, activity scouts 180, and guided activities 190―are distinct features that can operate independently of the others. When combined, they provide an even more effective tool to empower the user with incrementally rising levels of information to solve tasks and problems. By providing the user with only the amount of information necessary to perform a task, the user interface presented to the user is clean, simple, and only as complex as required by the task. In sum, user interfaces consistent with the principles of the present invention provide users with minimal non-essential information when performing tasks.

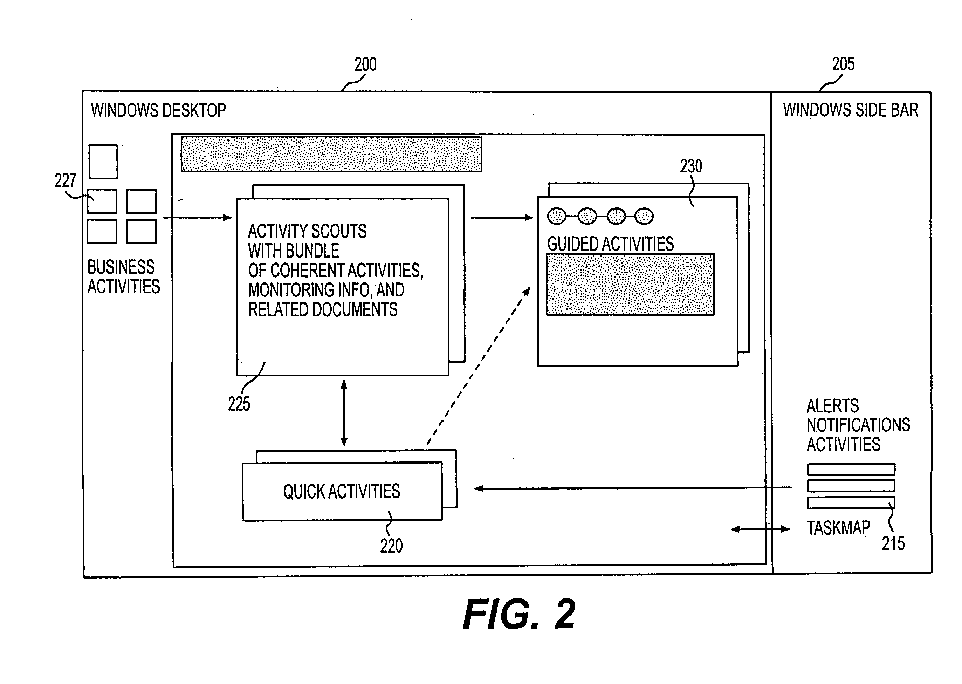

When implemented in a computer system, the user interface preferably takes the form of a series of alerts and windows on the user's desktop. Similar to Figure 1, Figure 2 illustrates a functional diagram of a user interface from the perspective of the user. This user interface will be described with respect to a Windows Longhorn desktop. This is purely for exemplary purposes, as the user interface may be implemented in any operating system that provides a graphical user interface, such as Windows XP, Unix, Linux, or Apple's OS X.

As shown in Figure 2, the exemplary user interface may include a Windows desktop 200 and Windows side bar 205. The side bar 205 contains the alerts 215 for the user. Desktop 200 includes icons for launching traditional PC-based software programs, such as Microsoft Word or PowerPoint. Desktop 200 also includes icons for launching activity scouts 225. Windows may be opened within desktop 200 to serve as portals for handling semi-automated tasks through quick activities 220 or activity scouts 225 and, if necessary, for handling more advanced tasks through guided activities 230. Each inventive feature will now be explained more fully in the remainder of the description.

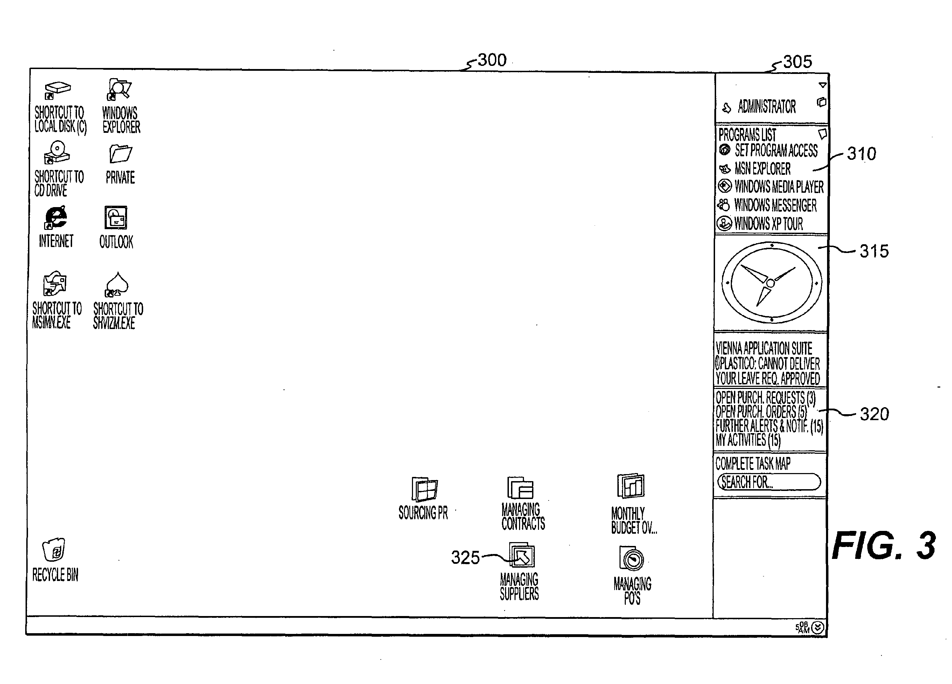

Figure 3 is a screen shot of an exemplary desktop 300. Desktop 300 represents a Windows Longhorn desktop. Windows Longhorn is the operating system designated by Microsoft to be the successor to the Windows XP operating system. While the system is illustrated with respect to Windows Longhorn, those skilled in the art will appreciate that the user interface features may operate on other operating systems that provide a graphical user interface. The sidebar 305 is designated by Microsoft to comprise one or more of a list of programs or favorites 310 and a clock 315. In addition, sidebar 305 has a pluggable feature, so that applications can utilize sidebar 305.

The user interface may utilize the plug-in feature of sidebar 305 to provide alerts and notifications 320. Alerts may be provided to inform the user of a critical or timely event. Notifications may be provided to inform the user of the status of one or more tasks. Using the alerts and notifications 320, the user can tell, at a glance, one or more aspects of his current workload.

The alerts and notifications 320 may be tailored to the specific role of the user operating the system. For a user having the role of a purchasing manager, as discussed above, typical alerts and notifications 320 illustrated in Figure 3 include warnings to the user of changes to an outstanding purchase order, links to information about the status of open purchase orders and purchase order requests, and links to a purchasing agent's activities. In particular, an alert 320 is shown noting that a supplier, Plastico, cannot deliver on a purchase order. Notifications 320 are shown informing the user of three open purchase requests, five open purchase orders, and the presence of fifteen other notifications or alerts.

By selecting an alert or notification 320, the user may be provided with further information affiliated with the alert. For example, clicking on a notification, such as "My Activities" in Figure 3, may prompt a "flyout" to appear. A flyout may comprise a separate window on the desktop that provides further information relating to the notification. For instance, activating the "My Activities" notification may open a window that lists tasks and events that the user needs to accomplish that day.

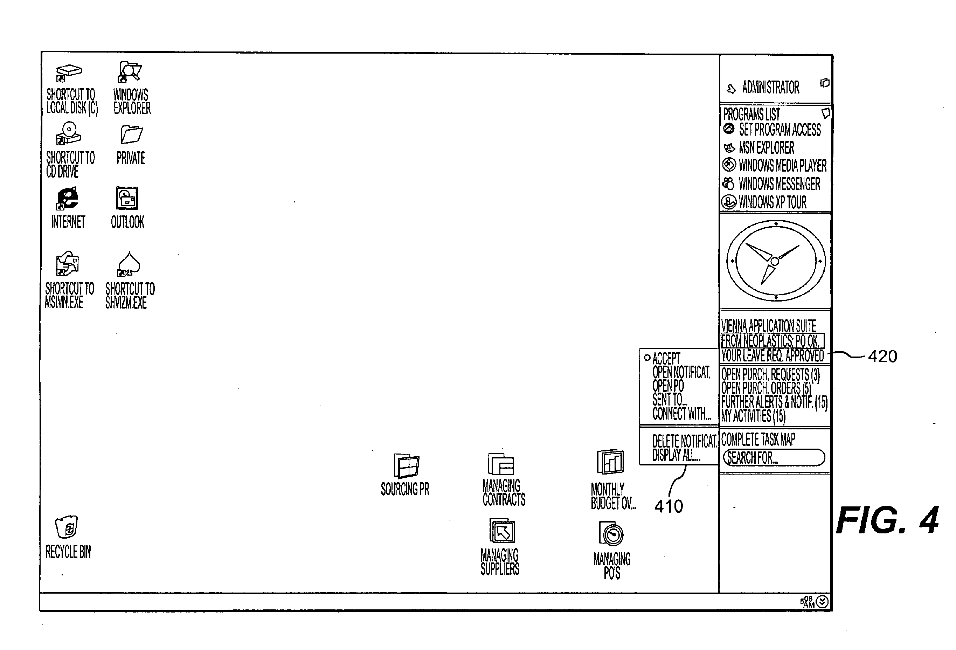

Selecting an alert or notification may, for example, also cause a contextual menu of options to appear that provides links for starting the performance of a task. Figure 4 illustrates a contextual menu 410 that may be brought up by a user in response to an alert or notification. For example, in Figure 4, alert 420 informs the user that his purchase order has been accepted by a supplier called Neoplastics. When the user activates the alert, for example, by right-clicking the mouse when the cursor is positioned on the alert, contextual menu 410 appears. The contextual menu 410 gives the user options for responding to the alert. These options may include, for example, accepting the alert, deleting the alert, or taking an action with respect to the alert. Taking an action may include, for example, opening the purchase order to see what it is that Neoplastics accepted. Taking an action may also comprise launching a quick activity window, an activity scout, or a guided activity window to obtain access to more detailed information affiliated with the alert.

Selecting a quick activity option of an alert or notification 225 will present the user with a quick activity window 220. The quick activity window 220 provides a smooth transition for the user between the basic options presented in the contextual menus of a selected notification 215 and the more detailed interaction and presentation found in activity scouts 225 or guided activity windows 230.

Quick activity windows 220 are small, streamlined applications that feature a user interface that provides the most frequently needed information to fulfill the desired task. Quick activities provide a minimal amount of information that is generally used to solve the majority of tasks that a user might want to undertake.

The quick activity window 220 preferably provide the core functionality to accomplish the task at hand. The quick activity window 220 may provide, for example: links to relevant information; links to activity scouts 225 and guided activity windows 230; a basic content pane for entry and display of forms; and a core function pane allowing the user to take action on the quick activity, for example, saving, sending, accepting, or rejecting.

The quick activity window may be called from any other part of the user interface or desktop. Although discussed above in terms of being called from a notification or alert, quick activity windows may be launched through icons on the desktop, such as 325 in Figure 3, or through activity scouts 225, as shown in Figure 2. Moreover, quick activities may be executed using a PDA that is later synchronized to the computer system, as shown in Figure 1.

By providing the user with most of the tools that he normally needs to accomplish the task at hand within the quick activity window, the quick activity window allows the user to accomplish the task with a minimum amount of time. In addition, the user does not need to open a primary program, such as SAP R/3, in order to accomplish a task. Thus, the user is not driven to learn complex systems and commands.

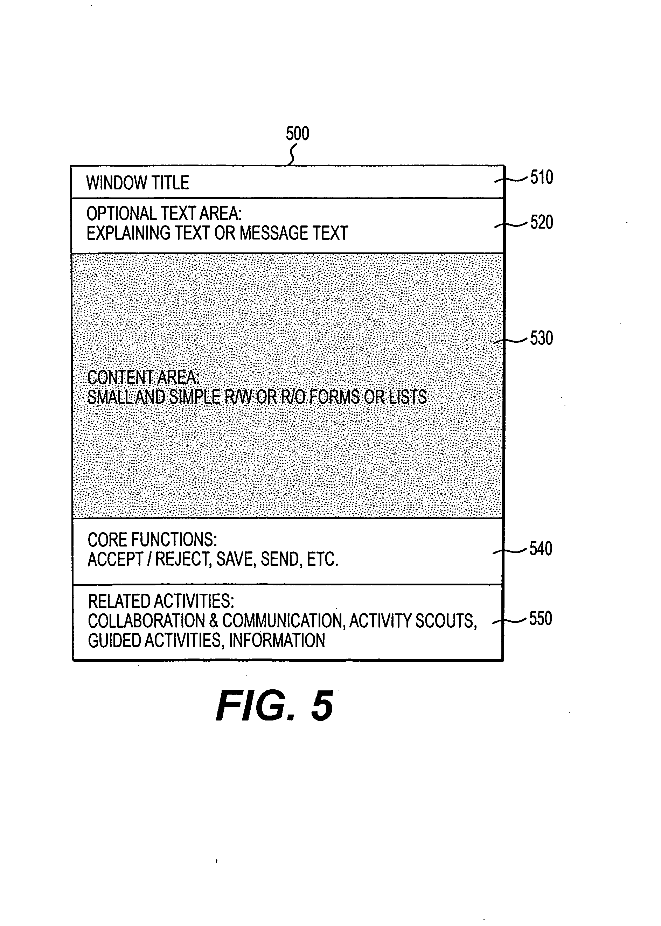

The quick activity window 220 may be constructed using a floorplan. A floorplan is a window having generic patterns with respect to screen structure and semantics. Figure 5 illustrates an exemplary quick activity floorplan 500 for a quick activity window. The user interface shown as quick activity floorplan 500 provides a generic pattern with respect to screen structure and semantics and is used to generate quick activity windows. The quick activity window, built from quick activity floorplan 500, provides the user with important views and actions associated with a business object. Thus, systems providers build quick activity floorplans 500 specifically for a given customer. The systems provider may use an analysis of a customer's metadata to determine the content of the plurality of quick activity floorplans 500 that are to be constructed.

The quick activity floorplan 500 may comprise one or more of the following building blocks, or components: a window title 510; a text pane 520; a content pane 530; a core function pane 540; and a related activities pane 550. Window title 510 provides information on the nature of the quick activity window. Text pane 520 provides messaging or explanatory text that will assist the user in understanding the task that is to be resolved through the use of the quick activity window. Content pane 530 may comprise small forms or lists. If a form is present in content pane 530, the user may be able to complete the form or the form may be partially or completely pre-filled. User interface 530 may also present read-only lists in content pane 530. While those skilled in the art will appreciate that multiple and complex forms could be placed in content pane 530, the principles of the user interface encourage simplicity in content pane 530.

Core functions pane 540 presents the user with one or more choices of appropriate action given the content pane 530. Core functions may include, for example, accept, reject, save, or send. The range of core functions is boundless given the range of data and forms that may be placed in content pane 530. Related activities pane 550 includes links to secondary activities that are related to the primary task of the quick activity window. Secondary activities may include, for example, links to activity scouts, guided activities, structured data, and unstructured data, such as scanned images and word processing documents. In addition, secondary activities may include links to communications and collaboration tools such as emails and Lotus Notes.

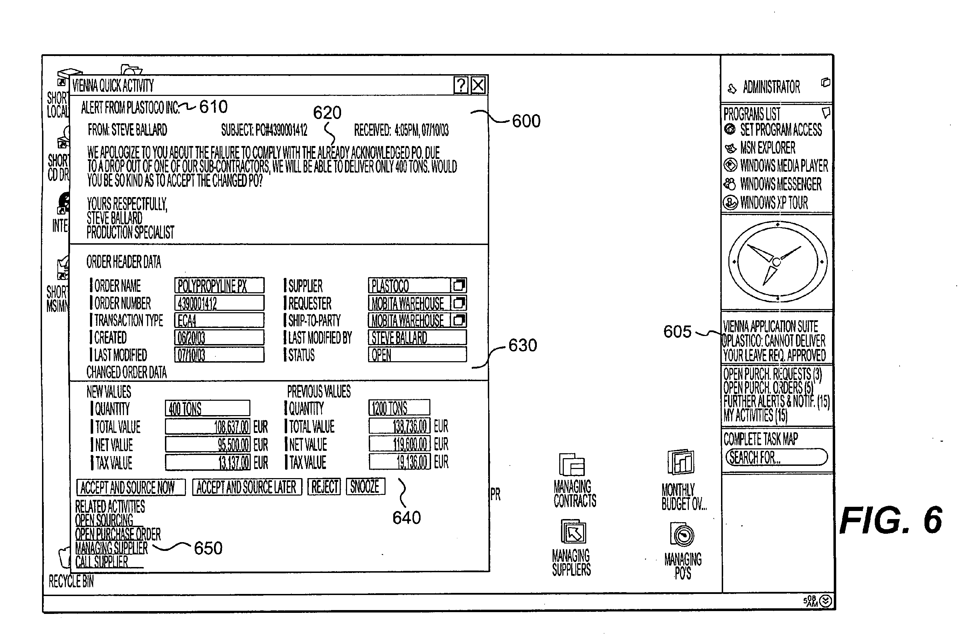

Figure 6 illustrates an example of a quick activity window 600. As shown in Figure 6, the user's side bar includes an alert 605 indicating that Plastico, a supplier, cannot deliver the requested quantity of goods. By activating alert 605, possibly via a contextual menu, quick activity menu 600 is launched. The title 610 of quick activity window 600 is "Alert from Plastico Inc." The text pane 620 consists of an email from Steve Ballard, a Production Specialist with Plastico, stating that Plastico will be unable to deliver more than 600 tons of PPX that had previously been ordered. Because of the nature of the alert, quick activity window 600 is a change order quick activity window, so the content pane 630 has brought up a change order form. Content pane 630 shows header information at the top of the form and change order data at the bottom of the form. The form has already been completed showing the change in order quantity from 1200 tons to 400 tons. Thus, the user has been presented within content pane 630 with most of the information that he needs to immediately act on the alert. The user can accept the data as pre-filled or can make changes.

Core function pane 640 for quick activity window 600 are "Accept and Source Now," "Accept and Source Later," "Reject," and "Snooze." Once again, the content of core function pane 640 is driven by the content of content pane 630. The user can dispatch with quick activity window 600 and accept the change order by selecting the "Accept and Source Later" option in the core function pane 640. Depending on how quick activity window 400 is designed, "Accept and Source Now" may bring up another quick activity window for sourcing or may bring up a more complex guided activity window. Related activities pane 650 contains links to other quick activities, guided activities, or collaboration and correspondence functions. For example, the user may select the "Call Supplier" link to have his telephone dial Plastico.

Thus, most of the tools needed by the user to resolve this purchase order alert may be found within quick activity window 600. Those skilled in the art will appreciate that a great many quick activity windows may be designed for each role, and multiplied by the number of roles within an organization. A client-server system may provide hundreds or thousands of quick activity windows depending upon the number of roles within an organization. Each role may require, for example, ten to twenty quick activity windows. But the front-end expense of such an investment should be quickly recovered through the savings found in manpower and training costs with the present user interface.

Returning to Figure 2, activity scouts 225 are designed to be the user interface window that most users turn to in the daily monitoring of their ongoing activities. Activity scouts 225 may collect a set of ongoing and routine responsibilities or activities that the user may use as a routine point for entering into activity processing using the enterprise solution. Each role in the organization may have, for example, two to ten activity scouts, depending on the nature of the role. Entry points to activity scouts 225 may be provided as links from the desktop in the form of activity scout icons.

Compared with quick activity windows, which provide a smooth and progressive transition for handling alerts and notifications made on the desktop, activity scouts 225 enable the user to accomplish tasks that require access to more complex data. While abiding by the principles of pushing data to the user and progressively unfolding the disclosure of data, activity scouts 225 provide the user with access to all types of data that are typically required for accomplishing most tasks in the user's role.

Activity scouts 225 may gather related views, links, documents, and folders into a central viewing repository in order to provide planning and decision support. Consequently, activity scouts 225 can work with structured data, unstructured data, and metadata. Structured data is data that is ordered and accessed, for example, through a database such as in an enterprise solution such as SAP R/3. Unstructured data is data that has no structure, such as word processing documents, scanned images, and Adobe Acrobat files. Metadata is data that provides definitional functions to a system, such as role descriptions and permissions for system users.

The user may launch an activity scout 225 in several ways. For instance, the user may select an activity scout icon 227 on the desktop, select a link in quick activity window 220, or select a link in a contextual menu from a notification or alert 215. In the usual course of operation, a user will engage an activity scout from the associated activity scout icon 227 to monitor a responsibility or begin a task. Or a user could engage activity scout 225 from quick activity window 220 if the quick activity window 220 did not provide enough information or tools to complete a user's desired task.

These components may include one or more activity links to activities related to the activity scout. Upon selecting an activity link, activity scout 225 may present one or more miniviews comprising data and status information of the selected activity link. For example, an activity link in an activity scout monitoring suppliers may pull up a miniviews of supplier performance statistics. Activity scouts 225 may also include a shelf pane with links to related information and links to related public or private folders of information. Each user may have, for example, from between two and ten activity scouts depending on her role in the organization. As with the other features of the user interface, activity scouts 225 are tailored to the role of the user, and the user may customize elements within activity scouts 225.

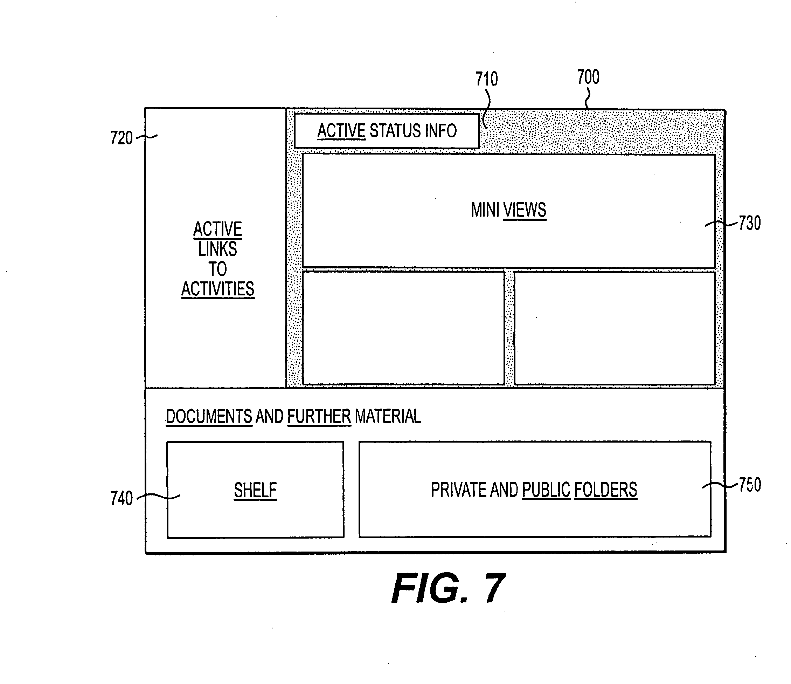

Figure 7 illustrates an exemplary activity scout floorplan 700 for an activity scout. Activity scout floorplan 700 may comprise one or more of: a title 710; links to related activities 720; one or more miniviews 730; a shelf 740; and a folder pane 750. In addition, a search window may be provided in activity scout floorplan 700 to enable searching for documents or links.

Links to related activities 720 contain links to one or more activities related to the activity scout. For example, a purchasing manager's activity scout for managing suppliers may contain, for example, links to finding new suppliers, reviewing suppliers' performance, annual planning, and contractual issues. The content of miniviews 730 may change depending on the selected link in links to related activities 720. Any given link from related activities 720 will provide one or more appropriate miniviews 730. Miniviews 730 may provide dynamic or static information and may include reporting information, such as pie charts, bar charts, and tables, as well as links to associated activities. The links to associated activities in one of the miniviews 730 may bring forth a quick activity window or guided activity window, for example.

Shelf 740 contains links to structured and unstructured data that is of use as an appropriate resource to the user for the given activity scout. Folder pane 750 contains links to public and private folders of documents that are appropriate to the activity scout.

Thus, activity scouts serve as a control panel and window onto the tasks, planning, and reporting needed on a regular basis by the user.

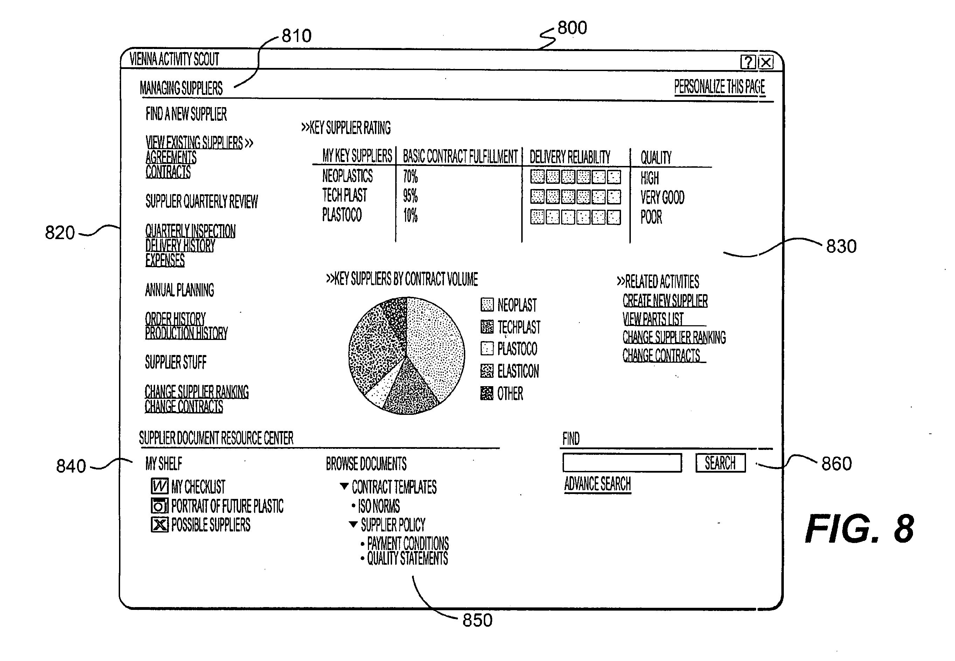

Figure 8 illustrates an exemplary activity scout 800. Activity scout 800 is a supplier management activity scout for a user in the role of a purchasing manager. The title 810 of activity scout 800 is "Managing Suppliers." A number of links to related activities 820 is illustrated including links to information on finding a new supplier, supplier quarterly review, annual planning, and other supplier information.

In this particular example, the "View Existing Suppliers" link is selected from the links to related activities 820, so existing supplier information is shown in miniviews 830. The upper miniview 830 is a dynamic table showing key supplier ratings. The lower left miniviews 830 is a dynamic pie chart showing key suppliers by contract volume. As the underlying data changes, the miniviews 830 may dynamically update to reflect the changed information. While in this particular set of miniviews dynamic information may not be particularly necessary, other roles, such as production supervisors, may find the dynamic capabilities of the miniviews 830 critical to performing their job function.

The lower right miniviews 830 is a list of links to related activities. Depending on the link, the link may bring up, for example, a quick activity window or a guided activity window.

A shelf 840 lists documents relevant to Managing Suppliers activity scout 800, such as an Excel spreadsheet of possible suppliers. In addition, a folder pane contains links to public and private folders of documents relevant to activity scout 800. A search pane 860 may also be present to permit the user to enter information and perform a logical or natural language search for other documents or data that might be useful in managing suppliers.

Because the activity scout may become an integral part of the user's day in performing her tasks, the activity scout is customizable. For example, the user may "drag and drop" documents to shelf 840. As another example, the user may modify the miniviews 830 that are presented from a link 820. For example, the user may change a pie chart to a bar chart or may list suppliers by quantity or dollar volume. All aspects of the links 820, miniviews 830, shelf 840, and folder pane 850 are modifiable by the user to tailor activity scout 800 to his own needs and experience. The user may modify an activity scout without the modification being applied across all users in his role.

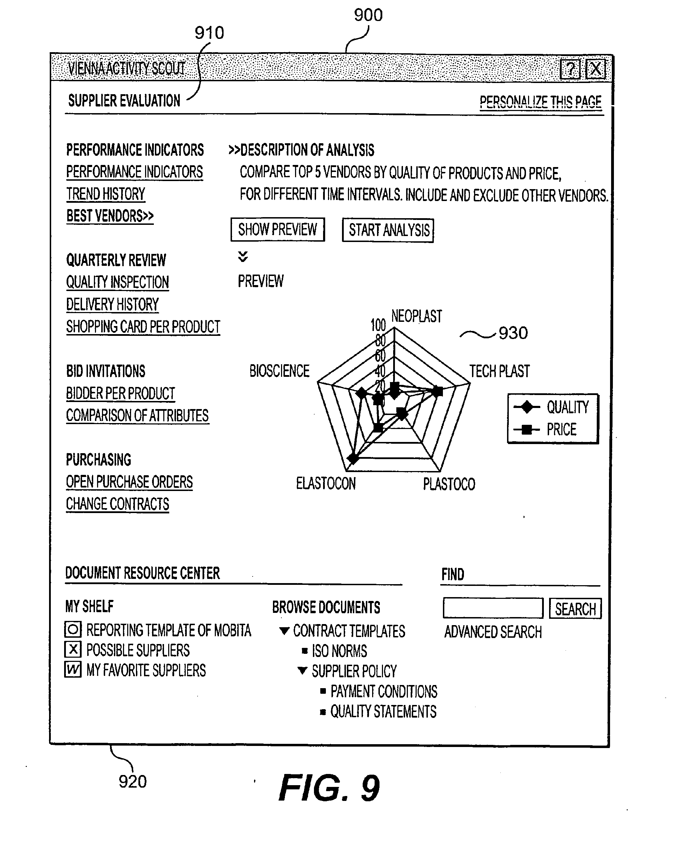

Figure 9 is an illustration of another exemplary activity scout 900. The title 910 of activity scout 900 is "Supplier Evaluation," and it is intended for use by a user in the role of a purchasing agent or manager to evaluate a supplier's performance. Links to related activities 920 displays links to performance indicators, quarterly reviews, bid invitations, and purchasing. The user in activity scout 900 has selected "Best Vendors" as the desired link, so miniviews 930 displays an analysis of the top five vendors by quality and price. Using this analytical tool, the user could select a vendor with whom to place an order.
Thus, the user may want to personalize activity scout 900 by including a link in a miniview 930 to an order placement quick activity window or guided activity window.

When activity scouts 225 do not provide enough information to perform a task, a user may engage a guided activity window 230. A guided activity window provides guided access via an enterprise portal to complex business-management databases.

Guided activities operate on the premise that most business activities can be structured into sequences of one or more steps. Guided activity window 230 displays those sequences to the user in a transparent manner, step by step. Guided activity window 230 provides a high level of guidance to the user to avoid errors, irritation, and frustration. Comprising a time series of screens, guided activity window 230 provides simple screen layouts placing one primary task on a screen at a time as each step of the task is performed. Like other aspects consistent with the principles of the present invention, the user is typically shown only the relevant information necessary for each step of the sequence. Explanatory text may be present on each screen of guided activity window 230, as well as links to secondary tasks. The user, to suit his needs or abilities, may easily modify guided activity window 230.

In a preferred implementation, guided activity window 230 provides an "active roadmap" at the top of the window to indicate the step that the user is currently performing. The user may directly go to a step by selecting the step from the active roadmap. Guided activity window 230 may comprise one or more of: a content pane for displaying data to the user and accepting user input and selections; and a related actions pane with links to related actions of secondary, related tasks. A separate pop-up window may be provided to give the user more detailed information about a related action.

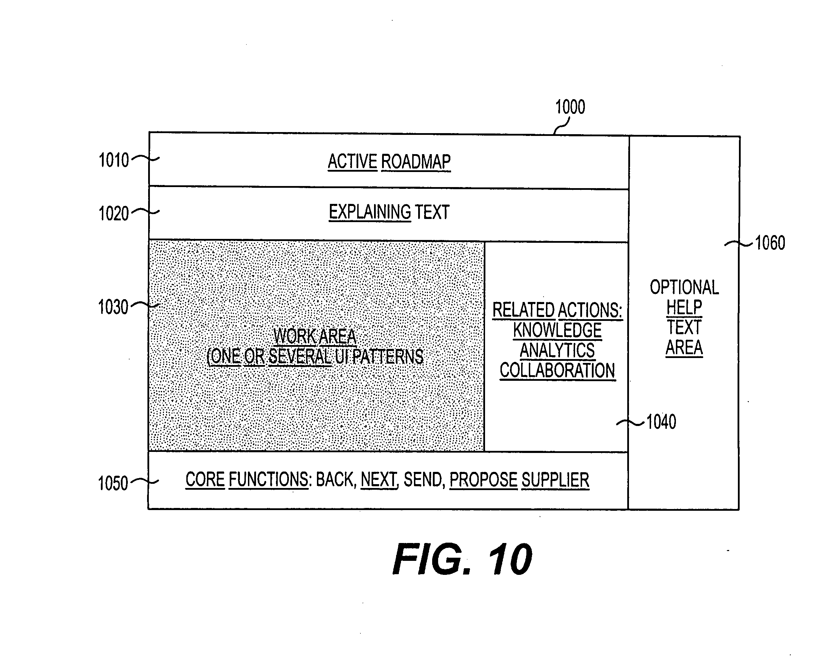

Figure 10 illustrates an exemplary guided activity floorplan 1000. Guided activity floorplan 1000 may comprise one or more components, including: an active roadmap 1010, explanatory text 1020; work pane 1030; related actions 1040; core functions 1050; and help pane 1060. Active roadmap 1010 indicates to the user the sequence of steps that need to be accomplished to complete the task. This guides the user through the task. Active roadmap 1010 may be an active element on which the user may directly select a step and be taken to that screen; however, some steps may be dependent upon others being complete. The user may be permitted to minimize active roadmap 1010.

The content of the remainder of the components may vary depending on the step of the roadmap selected. For example, panes 1020-1060 may all or partially change based on the step of the sequence that is being performed by the user. As each step in the sequence is performed by the user, the relative locations of the text 1020, work pane 1030, related actions 1040, and core functions 1050 may stay the same, while the content of those components changes. Thus, a stable pattern is presented to the user as she steps through the sequence shown in active roadmap 1010.

Text 1020 displays basic instructional text for completing the current step of the sequence. For further information and help, the user may select to display a help pane 1060. Work pane 1030 displays a user interface pattern, or form, to the user for allowing completion of a step of the task. The user interface pattern may be drawn from a common pool of user interface patterns and plugged into work pane 1030. User interface patterns may include, for example, data entry forms or tables, analysis patterns, and comparison patterns. The user may be able to personalize work pane 1030.

Related actions 1040 displays one or more secondary, related tasks or activities that the user may wish to perform or consult in the course of engaging in the primary activity through the guided activity window. Selecting a link in related actions 1040 may bring forth, for example, a quick activity window or an activity scout.

As in the quick activity windows, core functions 1050 provide a course of action that the user may select to progress through or complete the guided activity window task.

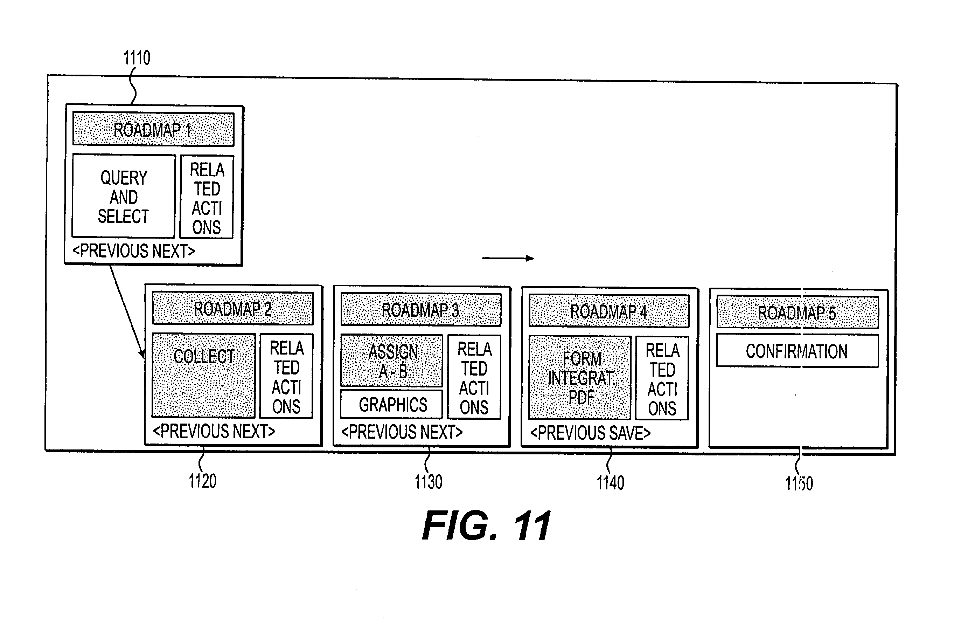

Figure 11 illustrates an example of a plurality of guided activity floorplans 1110-1150 showing the composition of the floorplans through a five-step guided activity sequence. The components of the floorplans have a consistent look and placement across the sequence. While floorplans 1110-1150 clearly show the work pane changing as the user steps through the sequence, the related actions are also likely changing as the user steps through the guided activity.

At step one of the sequence, guided activity floorplan 1110 displays an active roadmap, Roadmap 1, with step 1 highlighted in the five step sequence (shown later). The work pane of floorplan 1110 displays a query and select user interface pattern. The core function pane of floorplan 1110 displays two options, previous and next.

When the user goes to the Next Step, floorplan 1120 is displayed. Like floorplan 1110, the active roadmap of floorplan 1120 displays that step 2 is engaged and the work pane of floorplan 1120 changes to a collection user interface pattern. Also, the core function pane of floorplan 1120 displays two options, previous and next.

Similar changes to the work pane take place in floorplans 1130 and 1140. The work pane in floorplan 1130 displays a combination of an assignment user interface pattern and a graphics user interface pattern. The work pane of floorplan 1140 displays a user interface pattern of an actual form that will be generated by this guided activity window.

Guided activities may be more fully understood through the following discussion regarding a user navigating through a guided activity window. In our previous examples, a vendor was not able to supply all 1200 tons of PPX required by the purchasing agent. The vendor, Plastico, could only supply 400 tons. Due to the need for more detailed system data to meet his needs for raw materials, the purchasing agent launches a sourcing guided activity window. In Figures 10-14, the purchasing agent uses the sourcing guided activity window to order some of the remaining 800 tons of PPX needed to compensate for Plastico's inability to delivery.

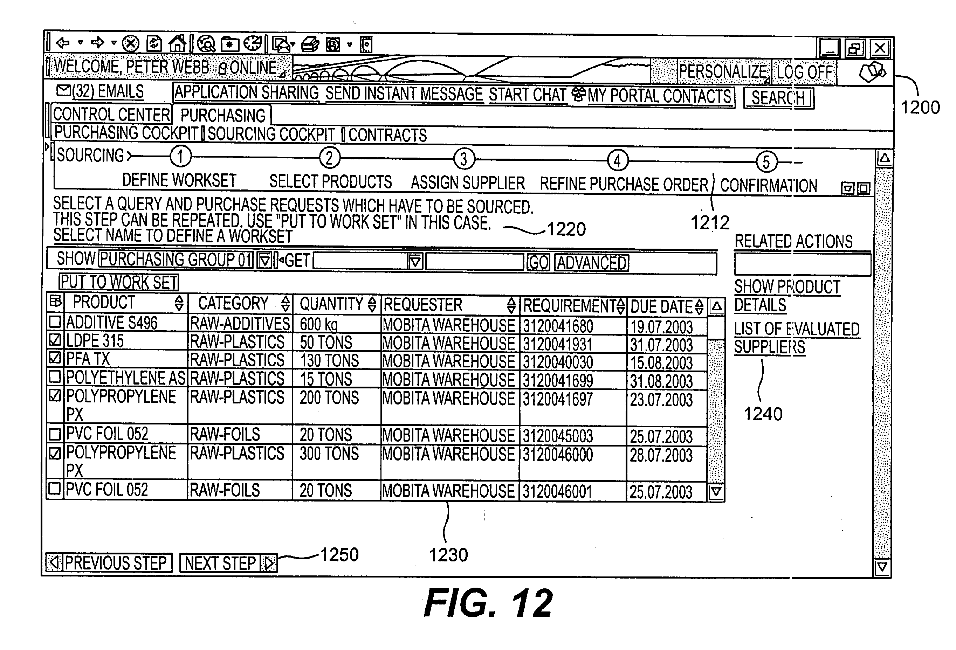

Figure 12 illustrates an example of step one of a five-step sourcing guided activity window 1200. The purchasing agent may have launched the sourcing guided activity window from a quick activity window or an activity scout. The user interface presents the purchasing agent with an active roadmap 1210 near the top of the guided activity window. Active roadmap 1210 includes highlighting for step one in the guided activity, "Define Workset." Text pane 1220 informs the user that he needs to select a query and purchase requests that need to be sourced. Work pane 1230 displays a query and select user interface pattern. According to work pane 1230, the purchasing agent has selected the PPX product, of which 300 tons need to be sourced for his company, called Mobita, by July 28, 2003, and of which 200 tons need to be sourced by July 23, 2003. The user has also selected two other products. These selections define the worksheet that the user will be using in the next step of the roadmap.

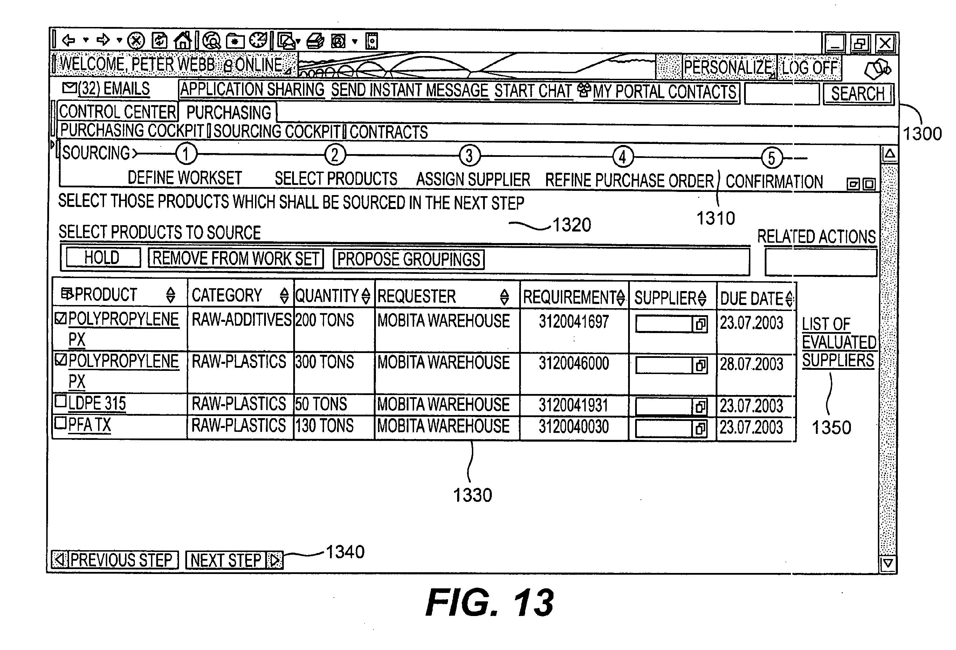

The user is also presented with related actions relevant to the current step in related actions pane 1240. As for core functions 1250 at the bottom of the user interface, the only function available to the user in this first step is to proceed to "Next Step." When the user selects Next Step, he is taken to the "Select Products" step shown in Figure 13.

Figure 13 illustrates an example of step two of a five-step sourcing guided activity window 1200. The user interface presents the user with active roadmap 1310 that shows the user that he is in step two, "Select Products," of the guided activity window. Text 1320 instructs the user to select those products from the worksheet in the work pane 1330 that he would like to source. As an aid, the user may select to view a list of evaluated suppliers through related actions 1350. In this example, the user has selected the two PPC products that need to be sourced.

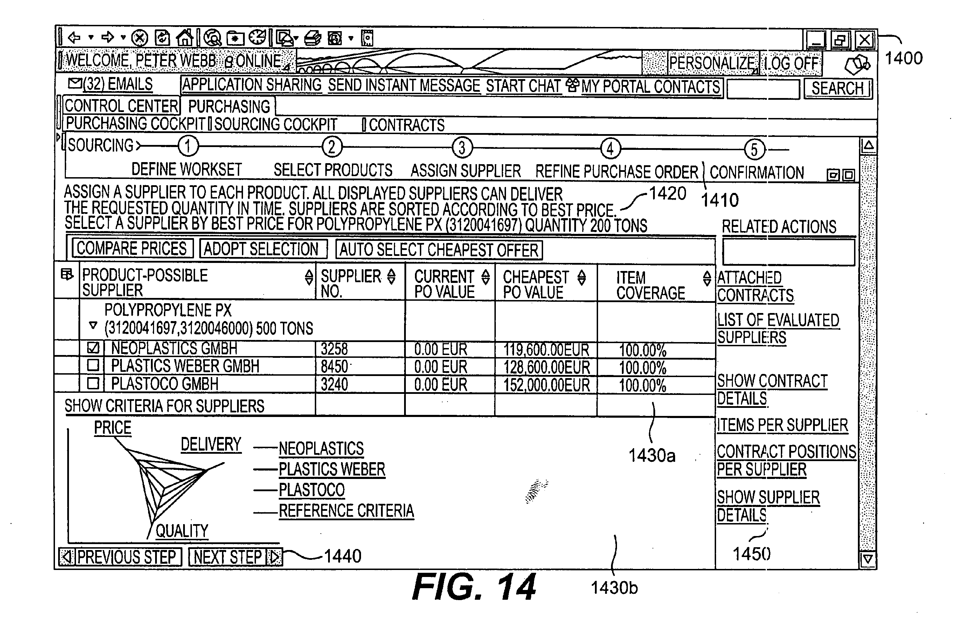

Both core functions 1340 of "Previous Step" and "Next Step" are available to the user in this second stage. When the user selects "Next Step," the user interface proceeds to the "Assign Supplier" step shown in Figure 14.

Figure 14 illustrates an example of step three of a five-step sourcing guided activity window 1200. The user interface presents the user with active roadmap 1410 that shows the user that he is in step three, "Assign Supplier," of the guided activity window. Text 1420 instructs the user to assign a supplier to each product. Work panes 1430a and 1430b illustrate two user interface patterns for assisting in completing this step of the task. Work pane 1430a illustrates a user interface pattern with a form for the user to select a vendor. Work pane 1430b illustrates reporting and analytic information on past performance and current price of potential vendors. Thus, within works panes 1430a and 1430b the user has the tools to complete this step of the task and to assign a supplier to meet the raw material needs.

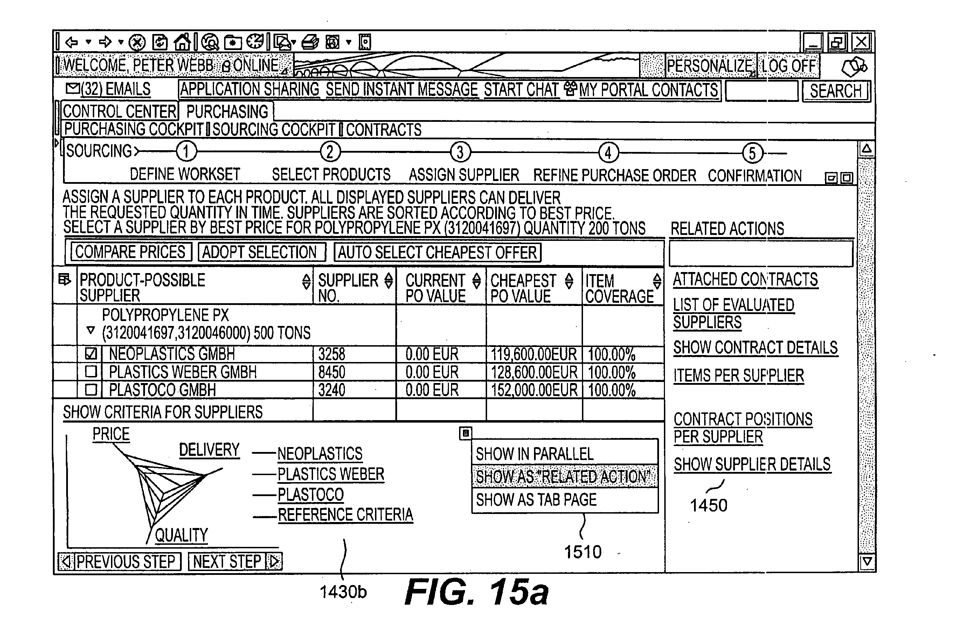

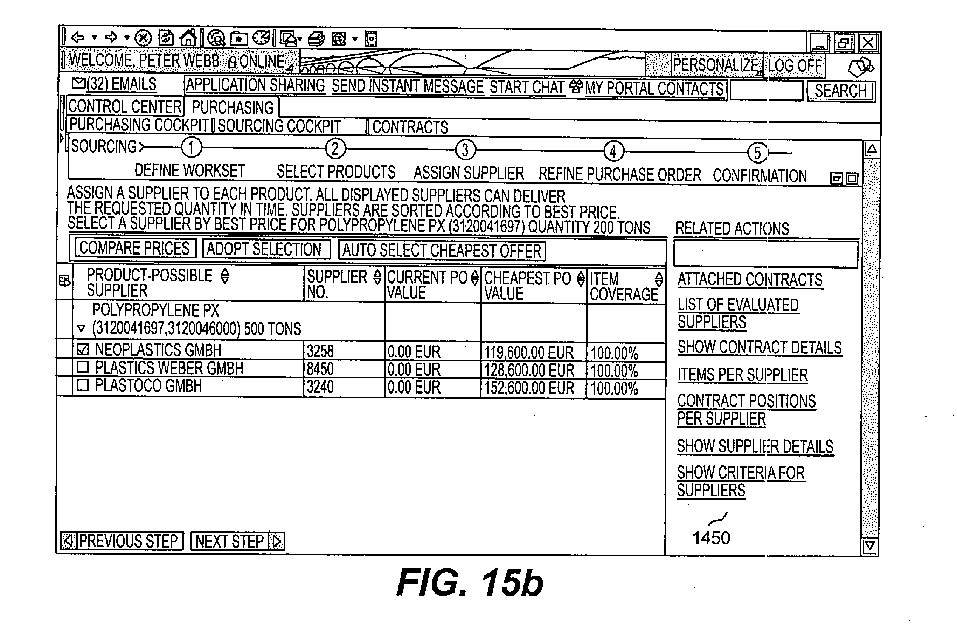

While Figure 14 shows the default setting for work pane 1430b, like most aspects of the present disclosure, this user interface may be tailored by an end user. For example, Figure 15a shows a contextual pop-up menu 1510 that the user may engage to eliminate the display of 1430b and reduce it to an additional listing in related actions 1450 or display the information in 1430b as a tabbed page. Figure 15b is the screen shot of step three after the user has selected, from the contextual pop up menu, to "Show Criteria for Suppliers" as a related action.

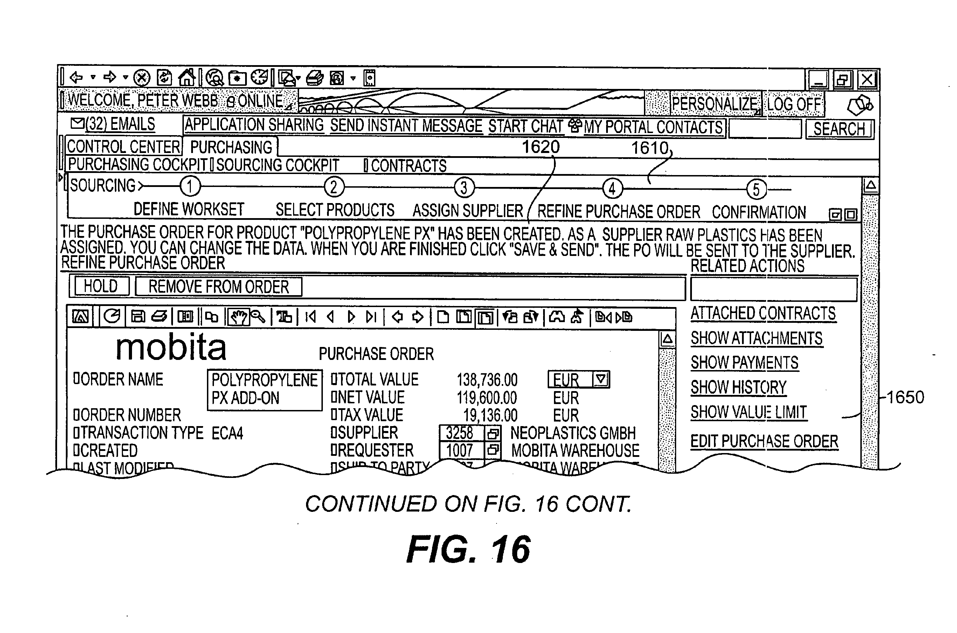

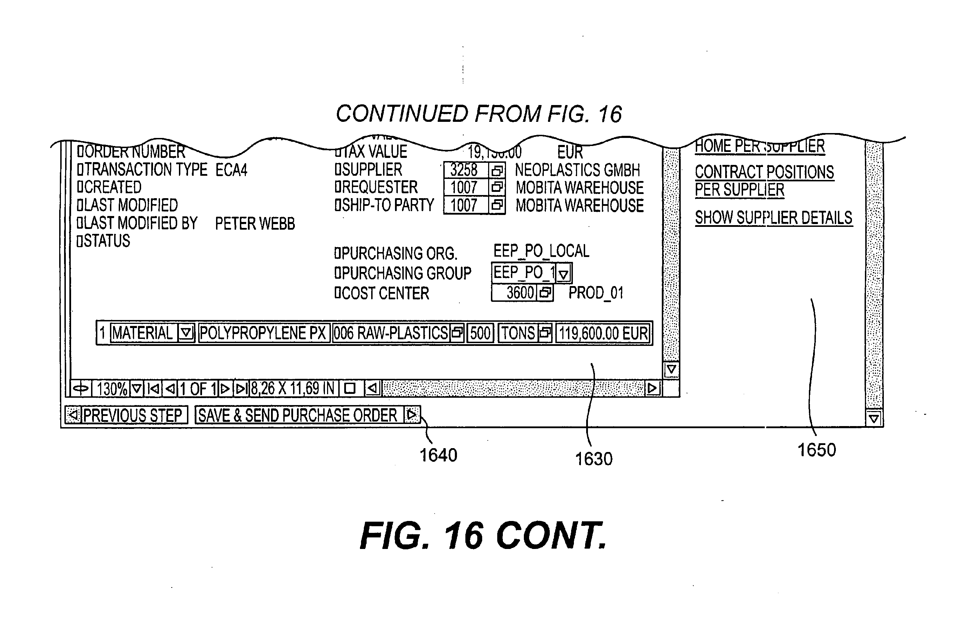

Referring again to Figure 14, the core functions 1440 of "Previous Step" and "Next Step" are available to the user. When the user selects "Next Step," he is taken to the "Refine Purchase Order" step shown in Figure 16.

Figure 16 illustrates an example of step four of a five-step sourcing guided activity window 1200. The user interface presents the user with active roadmap 1610 that shows the user that he is in step four, "Refine Purchase Order," of the guided activity window. Text 1620 instructs the user to review and optionally edit an Adobe Acrobat PDF file of the actual purchase order that is generated and will be sent to the supplier. Work pane 1630 displays the purchase order. By displaying the actual document that will be generated, users typically feel greater comfort with the system.

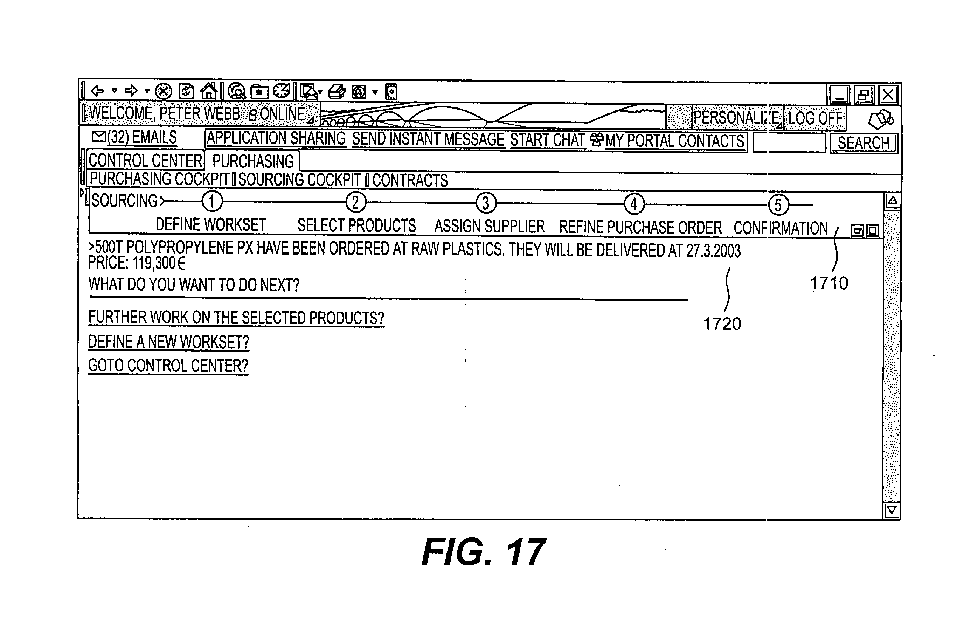

The core functions 1640 of "Previous Step" and "Save and Send Purchase Order" are available to the user. When the user selects "Save and Send Purchase Order," he is taken to the "Confirmation" step shown in Figure 17.

Confirmation of functions are often useful in providing feedback that the desired task or action has been completed. Figure 17 illustrates an example of step five of a five-step sourcing guided activity window 1400. The user interface presents the user with active roadmap 1710 that shows the user that he is in step five, "Confirmation," of the guided activity window. Text 1720 informs the user that the purchase order has been sent.

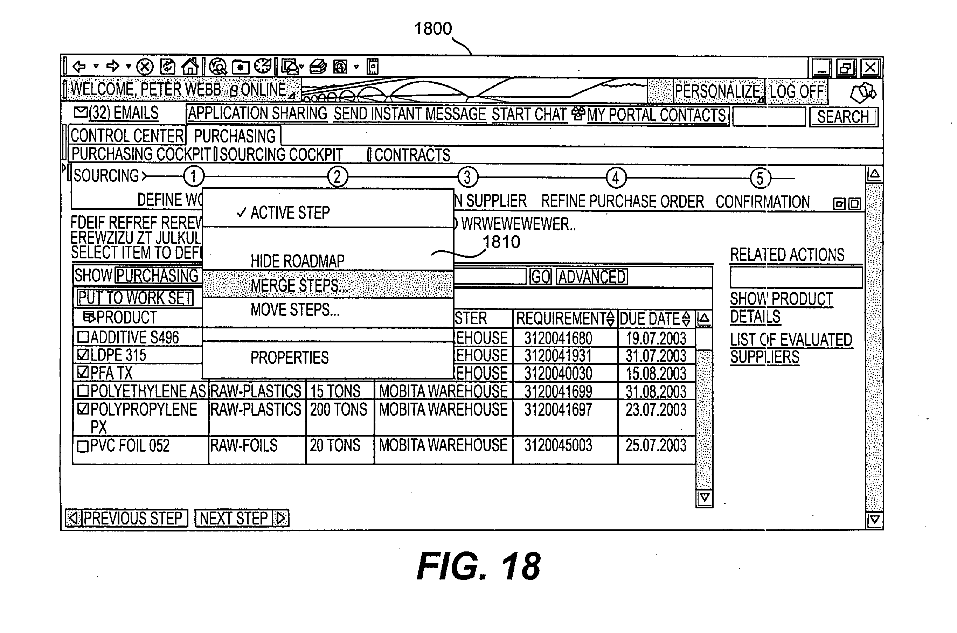

While certain aspects of user modification of the guided activity window have been described, namely moving a work pane to a related action, there are other modifications that a user can also make. For example, as a user becomes more comfortable with a guided activity, he may choose to merge steps or rearrange steps. Figure 18 illustrates a contextual menu 1810 that a user may bring up to merge steps within a guided activity window 1800. By right-clicking, for example, the user may bring up a contextual window offering the user the opportunity to merge steps.

As previously mentioned, the ability of the user to make changes to the user interface is not limited to the guided activity window. All user interface features of the present invention permit user adaptability. For example, a user could decide to show a single work pane in a window or multiple work panes in a window. A window may be displayed having a single pane, with functional links permitting the user to display additional panes. Or, multiple panes may initially be displayed and as panes are closed by the user the panes may be displayed as functional links. The user is free to choose her own style of working within the user interface, ranging from complex to simple displays.

As a user changes the user interface, certain previously displayed functions may no longer be relevant, so the system would no longer display those functions to the user. For example, in a multiple pane display, the user interface may display an option relating to both windows, e.g., moving an item from a first pane to a second pane. This function would no longer be necessary when the user changed the display to a single pane display, so this function would be removed from the user interface. Similarly, adding a second pane to a window that initially only displayed a single pane may cause the user interface to display additional functions relevant to a two window display, e.g., the previously mentioned moving an item function. In summary, screen elements may change based on the user's modification of the user interface.

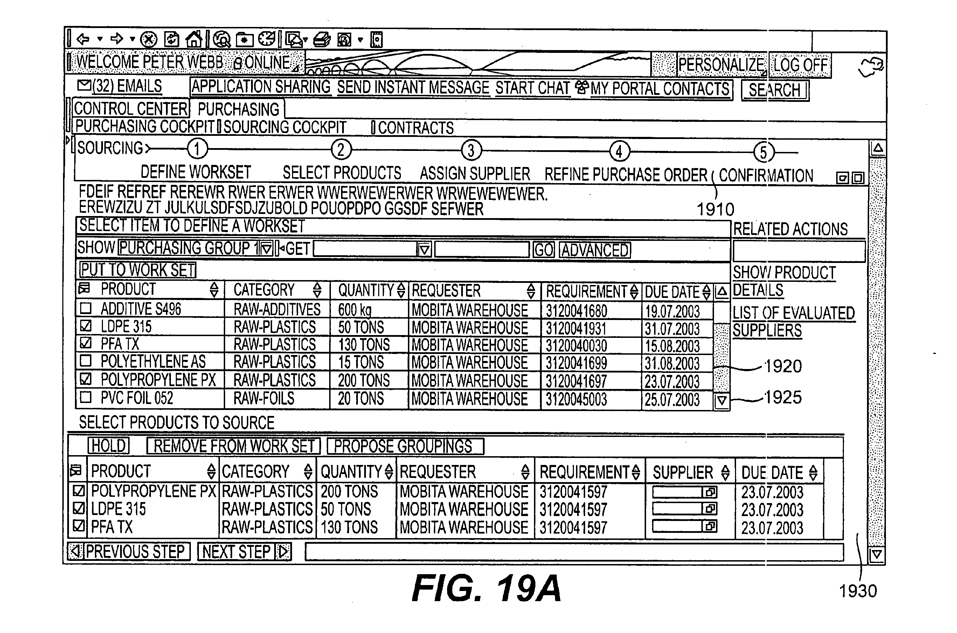

In Figure 19a, work pane 1930 from step two is placed on the same page with work pane 1920 from step one. Because step one is highlighted in active roadmap 1910, step one work pane 1920 is highlighted, for example, by being surrounded with a box 1925. As the user moves between work pane 1920 of step one and work pane 1930 of step two, active roadmap 1910 changes to highlight the step being worked on. Because the work panes 1920 and 1930 are dynamic, as the user makes changes in work pane 1920 for step one, the changes are reflected in work pane 1930 associated with step two.

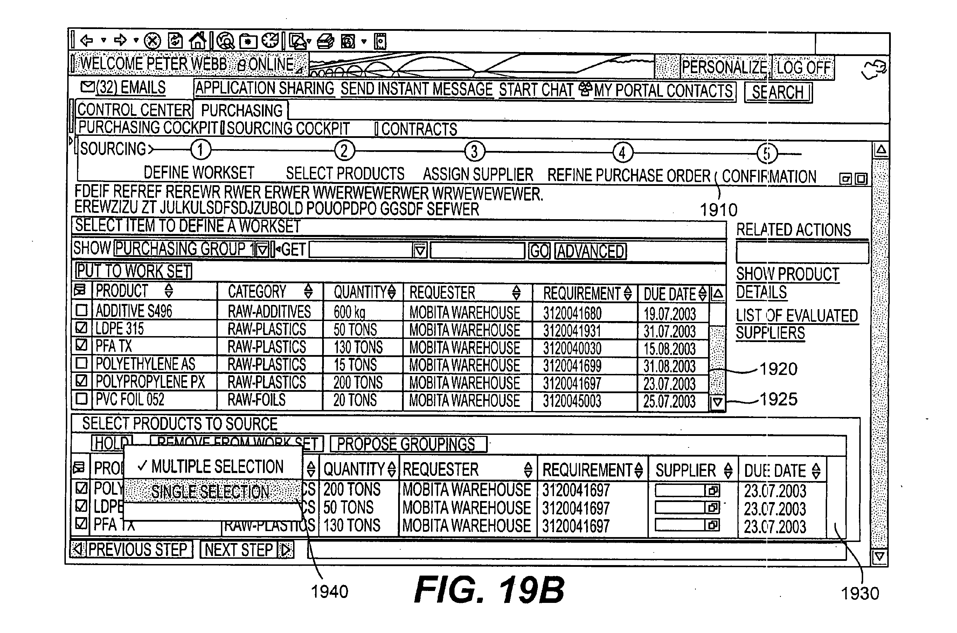

The user interface described in the specification may also permit the user to make changes in the user interface that results in a modified function set of the underlying application. For example, Figure 19b is a screen shot illustrating a contextual pop-up menu that the user may engage to change the representation of the user interface that causes changes in the functioning of the underlying application. In the illustrated user interface, the default selection options for the "Select Products to Source" pane 1930 are checkboxes, meaning that the user may select multiple options, e.g., multiple products to source. The user may elect through contextual menu 1940 to switch to a single selection, or "radio button," user interface, whereby the user is only allowed to make a single selection among the multiple options, e.g., only being able to select a single product to source.

By permitting the user to change selection options, for example, in the user interface, the user interface permits the user to make changes in the functionality of the underlying application. For example, if the default user interface only allows "radio button," or single selection from among a list of items, a user may change the user interface to "check boxes," permitting multiple selection among a list of items. This permits the user interface to change from a more simple structure to a more complex structure. Thus, the function set of the underlying application is changed by merely making changes in the user interface. This is in stark contrast to prior art user interface changing capabilities that only permit changes in the user interface that have no effect on the underlying application.

Consequently, guided activities provide a powerful tool for managers and manipulators of large amounts of data. They provide a streamlined method for completing common tasks in a business role without forcing the user to navigate or pull data from complex enterprise systems.

While a guided activity floorplan may guide the user through the main attributes of a single data object, more frequently a guided activity floorplan operates on a plurality of data objects. An object instance floorplan may be used to assist the user in accessing the data attributes of a single data object. Each of the user interface elements previously described may be implemented using an object instance floorplan. An object instance floorplan is generally dedicated to a single object instance, with header data and main attributes belonging to the data object accessible from the object instance floorplan. In contrast to a guided activity floorplan, an object instance floorplan does not require a roadmap as a defining element.

Many tasks require a user to access data of a business object in order to perform editing, input, or receive information. The business objects often contain many labels, tables, and sub-objects. This data cannot easily be displayed on one screen at the same time without causing undue confusion to the user. Object instance floorplans, as previously shown with respect to the specific guided activity floorplan, map complex business objects to separate views according to the needs of the task and the inherent object structure. An object instance floorplan may support the user in a way appropriate to the business object, allowing the user to access one or more views of the data object directly.

Views, also known as content patterns, may be designed so that one activity or task can be performed within a single view. Views may be predefined to be visualized on the display to provide orientation to the user. For example, functions may be placed within a first view, with secondary functions placed outside the first view. At times, users may have to switch between views in order to complete a task.

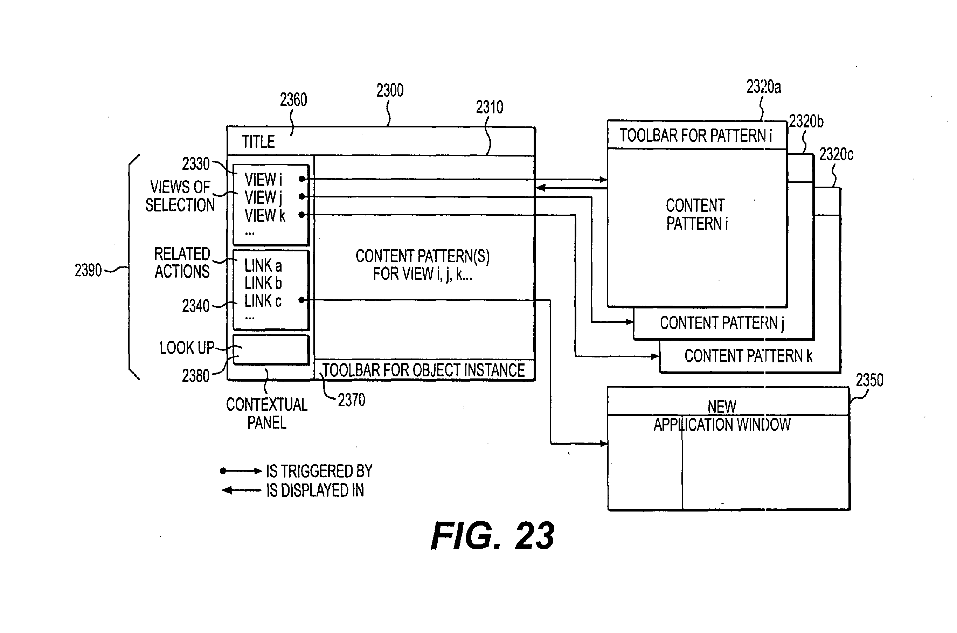

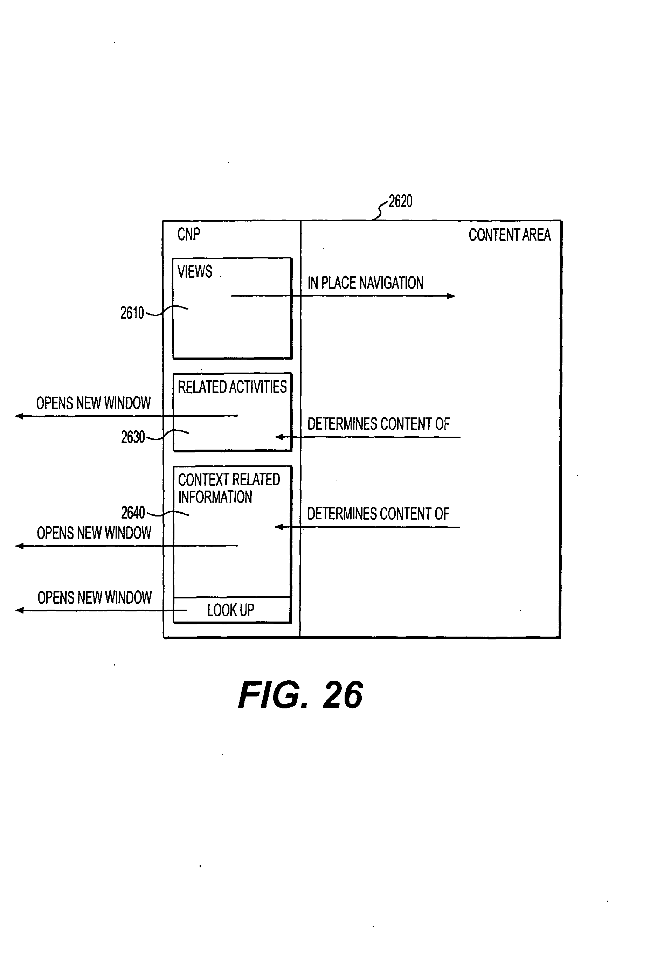

Figure 23 is an exemplary non-guided object instance floorplan 2300. Within a content area 2310, one or more content patterns 2320a-c may appear. The content patterns 2320a-c appear based on the selection in viewset selection area 2330. For example, if a user selected View j in viewset selection area 2330, the system would display content pattern j 2320b in content pattern area 2310. The viewset selection area allows navigation to generic and application specific content patterns. In addition, a related action area 2340 may also be present in floorplan 2300. Related action area 2340 may contain one or more links to other applications 2350, e.g., a quick activity window. Related action area 2340 allows access to activities that are directly related to the current task or content pattern, but are not the primary focus of the task. Lookup area 2380 may also be present in object instance floorplan 2300 containing links to context related information, e.g., viewing and maintaining related objects or documents, or searching for related objects or documents. Viewset selection area 2330, related action area 2340, and lookup area 2380 comprise a contextual navigation pattern 2390, discussed in more detail with respect to Figure 26.

Object instance floorplan 2300 may also contain a title area 2360 for displaying a title of object instance floorplan 2300, and a toolbar area 2370 for displaying tools, for manipulating data objects displayed in the one or more content patterns 2320a-c.

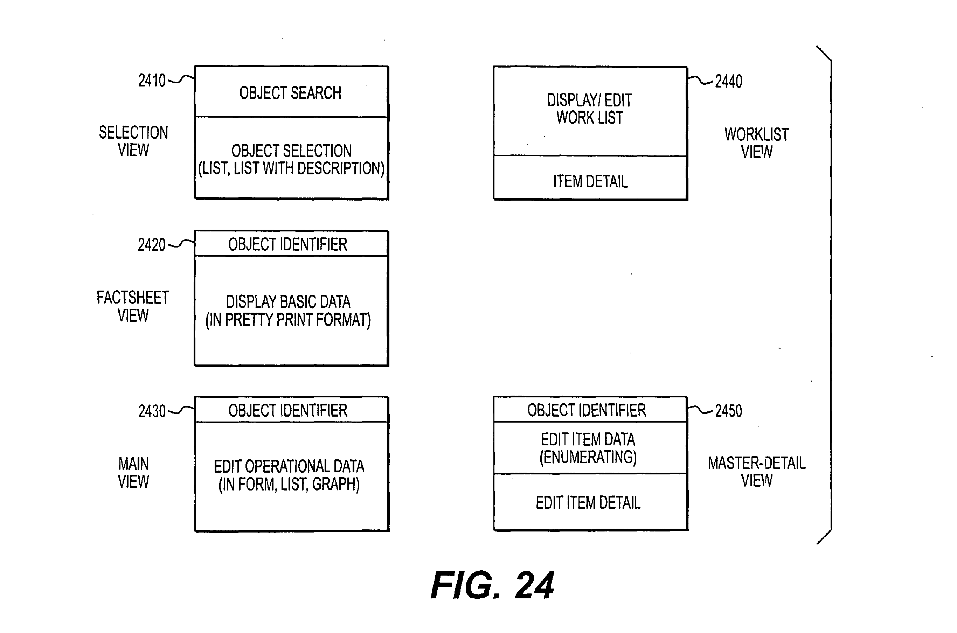

Figure 24 illustrates a plurality of exemplary content patterns that may be used in the object instance floorplan 2300. As previously described, one or more content patterns may be placed within content area 2310, with the content pattern selected based on the user's choice in the viewset selection area. A selection view content pattern 2410 may display the result of a search for a data object, displaying one or more of the data object search and an object selection portion. The object selection portion may be a list of data objects that meet the search criteria with a description. A factsheet view content pattern 2420 may display an identifier of the data object with one or more elements of the data object displayed in the content pattern 2420. A main view content pattern 2430 may display an identifier of the data object and operational data, for example, in form, list, or graphical display, of the data object. A worklist view content pattern 2440 displays one or more data objects in a work list for either display or editing. A master-detail view content pattern 2450 displays an identifier of the data object and item editing data of the data object. The above are exemplary content pattern, and those skilled in the art will appreciate that other content patterns can be developed.

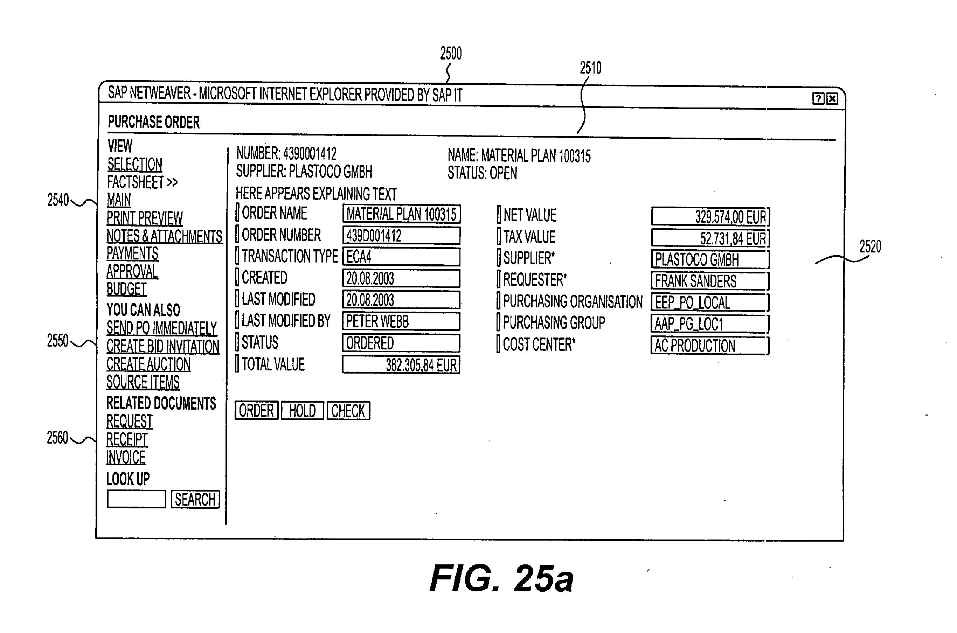

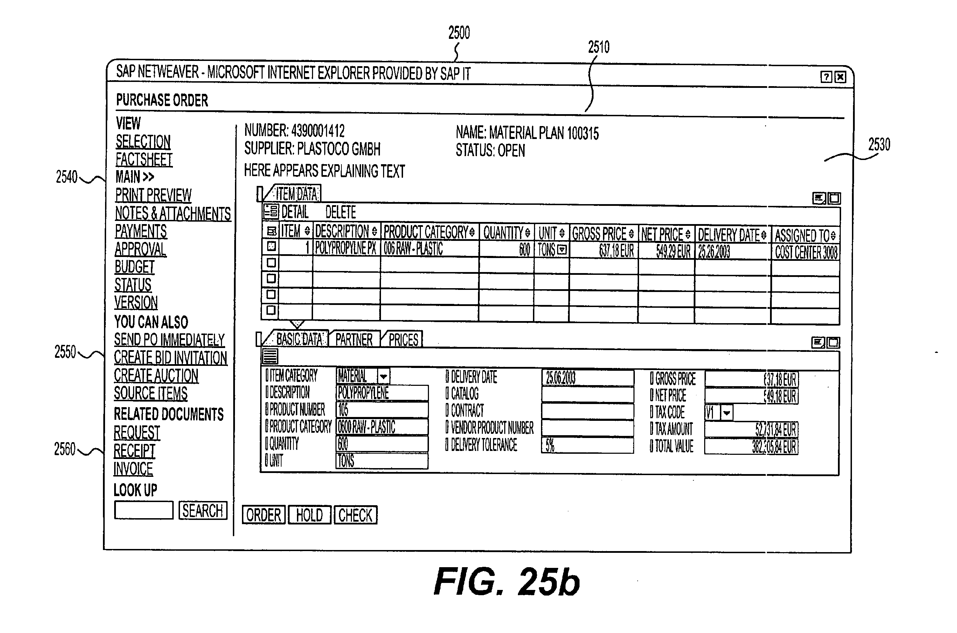

Figure 25 illustrates an exemplary object instance floorplan 2500 with two exemplary content patterns 2520, 2530 displayed in content area 2510. In the first view, a factsheet content pattern 2520 is displayed in content area 2510 because the system has responded to the user selecting "Factsheet" in viewset selection area 2540. In the second view, a main content pattern 2530 is displayed in content area 2510 because the system has responded to the user selecting "Main" in viewset selection area 2540. Exemplary object instance floorplan 2500 also has related actions area 2550 and lookup area 2560.

Figure 26 is an illustration of the relationship between the content of contextual navigation pattern and other actions and displays. Selecting a view in viewset selection area 2610 causes the system to display an associated content pattern in content area 2620. The contents of related activities area 2630 are based on the content pattern in content area 2620. Selecting a link in related activities area 2630 may cause a new application to launch in a new window outside of object instance floorplan 2600. The content of lookup area 2640 is also based on the content pattern in content area 2620. Selection of links, or performing a search or lookup, in lookup area 2640 may also cause a new application to launch in a new window outside of object instance floorplan 2600.

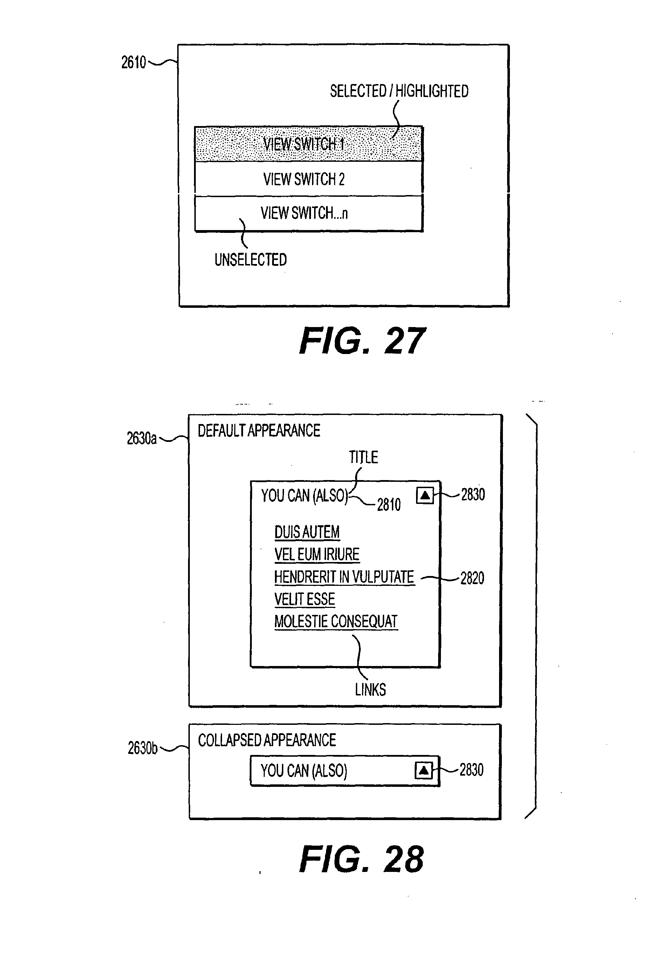

Figure 27 is an exemplary viewset selection area 2610. As illustrated viewset selection area 2610 may contain one or more links, or switches, to select content patterns for display in the content area. A selected link may be highlighted with the remaining unselected links not highlighted. There is one link selected at any point in time. If a user selects a link, the system will unselect any previously selected link.

Figure 28 is an exemplary related activities area 2630. As illustrated, uncollapsed related activities area 2630a may contain links to one or more activities that are directly related to the current task or view, but which are not the primary focus. It may contain a title area 2810 and one or more links to related activities 2820. The related activities 2820 may be collapsed by selecting the expansion icon 2830. Collapsed related activities area 2630b may prevent the user from being distracted by the related activities.

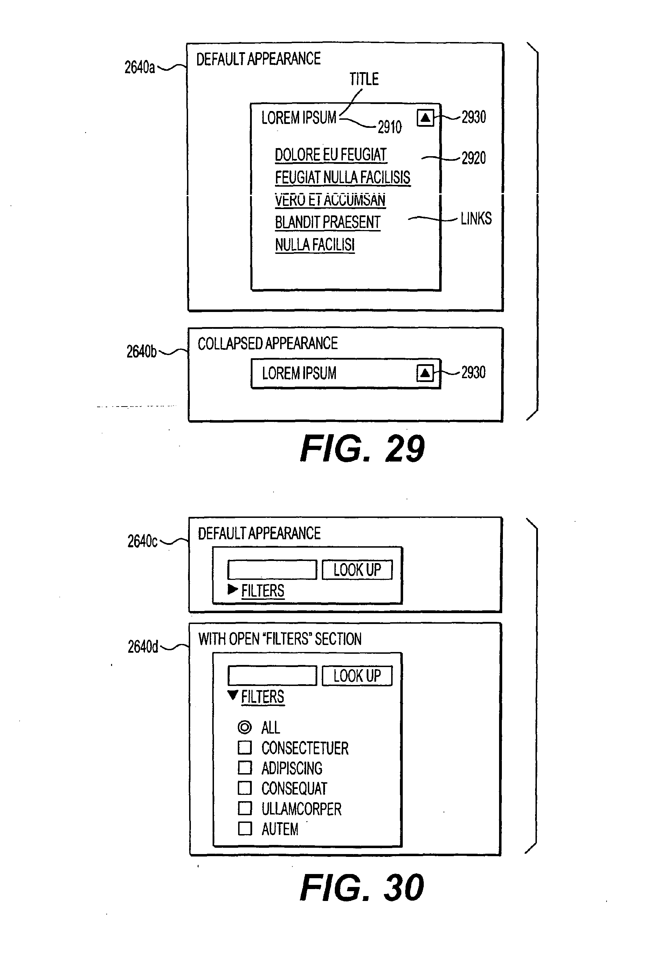

Figure 29 is an exemplary lookup area 2640. As illustrated, uncollapsed lookup area 2640a may contain links to one or more related data objects or documents. It may contain a title area 2910 and one or more links to related data objects or documents 2920. The links to related data objects or documents 2920 may be collapsed by selecting the expansion icon 2930. Collapsed lookup area 2640b may prevent the user from being distracted by the related data objects.

Figure 30 illustrates the search options in an exemplary lookup area 2640. In the default view 2640c, a search field may be filled in by the user who can select the Look Up button to start the search. In addition, the user may open the filters feature to further refine the search as shown in 2640d. Thus, the user can select one or more filtering options for the search.

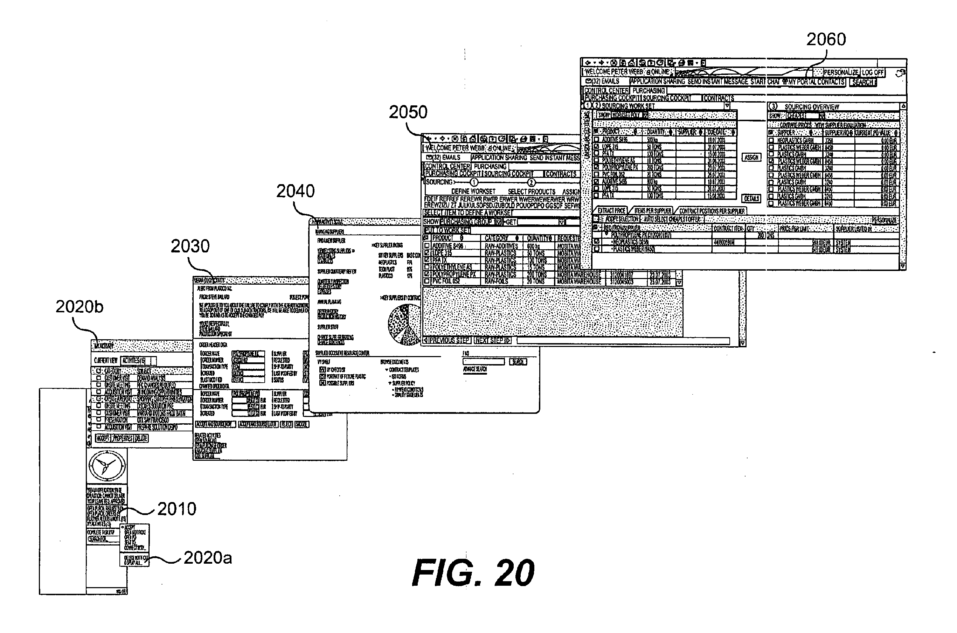

Figure 20 summarizes the escalating approach embodied in a user interface for helping an individual solve tasks. In general, the user is initially alerted to problems or tasks through notifications and alerts 2010 that may appear on the side bar of a Windows Longhorn desktop. Contextual menus 2020a and flyouts 2020b may provide further information to the user and a means for quickly acting on the alert or notification. In addition, if the flyouts and alerts do not provide enough information to perform a task, a quick activity window 2030 may be engaged to complete the task. Quick activity window 2030 may be able to solve the vast majority of a user's tasks and provides the minimal information necessary for the user to complete the task in a knowledgeable and efficient manner. Where more information is required, the user may utilize activity scouts 2040 or escalate to guided activity window 2050. If none of these user interface tools can solve the task, which will be a very rare occurrence, the user may directly access the underlying enterprise solution 2060.

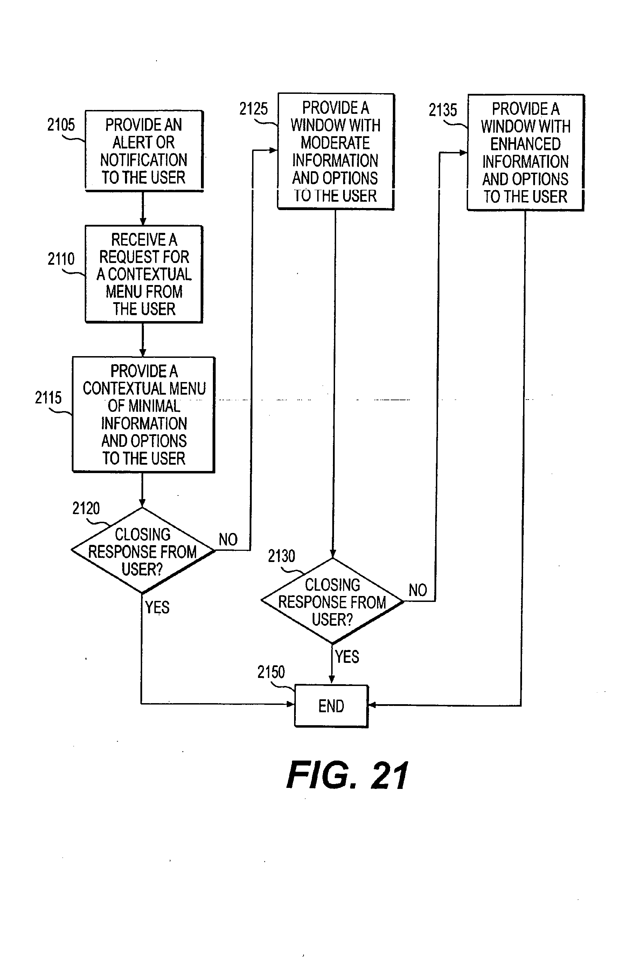

Figure 21 is a flowchart of an exemplary method of progressive disclosure. The user interface provides an alert or notification to the user (2105). At this point, the user may right-click the alert or notification to bring up a contextual menu (stage 2110). The user interface then provides a contextual menu with one or more options (stage 2115). The contextual menu may allow the user to quickly dispatch with the problem by, for example, accepting the notification that serves as a closing response to the user interface (stage 2120). Thus, the user interface understands that no further information needs to be provided to the user (2150).

On the other hand, the user may need more information to perform the task required by the notification or alert. In this case, the user interface may provide the user with a moderate amount of information, such as may be found in a quick activity window (stage 2125). The moderate amount of information is just enough additional information to allow the user to complete the task without encumbering the user with extraneous data. If the user is able to complete the task in the quick activity window, generally by providing an "Accept" response in the quick activity window to the user interface, the user interface can complete its processing of this task (2150).

However, the user may indicate the need for further information (2130). In this case, the user interface provides the user with enhanced information, for example through a guided activity window (2135). Thus, the amount of information is progressively disclosed to the user as needed and requested.

Those skilled in the art will appreciate that other user modifications can be made to the quick activity window, activity scout, and guided activity window of the present invention.

Those skilled in the art will appreciate that all or part of systems and methods may be stored on or read from other computer-readable media, such as: secondary storage devices, like hard disks, floppy disks, and CD-ROM; a carrier wave received from the Internet; or other forms of computer-readable memory, such as read-only memory (ROM) or random-access memory (RAM).

Furthermore, one skilled in the art will also realize that the processes illustrated in this description may be implemented in a variety of ways and include multiple other modules, programs, applications, scripts, processes, threads, or code sections that all functionally interrelate with each other to accomplish the individual tasks described above for each module, script, and daemon. For example, it is contemplated that these programs modules may be implemented using commercially available software tools, using custom object-oriented code written in the C++ programming language, or using applets written in the Java programming language.

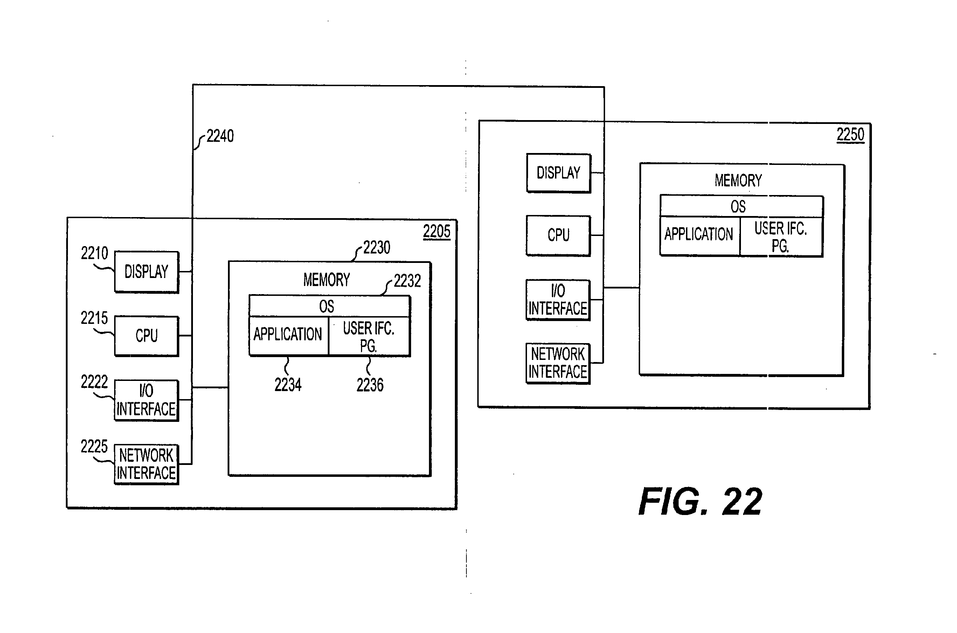

The user interface described above may operate on a client system 2205 or a server system 2250, or a combination of the two. Figure 22 is a block diagram of components of an exemplary client system 2205 and server system 2250. Client 2205 may be a general-purpose computer, personal digital assistant, terminal, or workstation or a specially constructed computing platform for carrying-out the user interface operations previously described. Client 2205, having CPU 2215, may provide the user interface to the user and associated communications with necessary databases, structured data, unstructured data, and metadata via I/O interface 2222 (which can be any conventional I/O device) or network interface 2225 (which can be any conventional interface) by direct connections or other communication links. Client 2205 may also provide a local or remote display 2210.

Alternatively, client 2205 can be part of a network such as a telephone-based network (such as a PBX or POTS), a local pane network (LAN), a wide pane network (WAN), a dedicated intranet, and/or the Internet. In this way, client 2205 may be located near or far from any necessary documents or databases.

Memory device 2230 may be implemented with various forms of memory or storage devices, such as read-only memory, random access memory, or external devices. Typically, memory device 2230 stores instructions forming an operating system 2232; one or more application modules 2234 for providing database and user application functions; and a user interface module 2236 for providing the user interface to the user, including the alerts and notifications, flyouts, quick activity windows, activity scouts, and guided activity windows.

Operating system 2232 may be, for example, Windows Longhorn, Windows XP, Apple's OS X, Linux, or Unix. User interface module 2236 may be designed to work in concert with the one or more application modules 2234. With such a design, the user interface module 2236 does not need to be redesigned or duplicated to work in each application module 2235. Such a design enables a common "look and feel" to be present across multiple applications.

As previously mentioned, Figure 22 also illustrates server 2250. Client 2205 may access server 2250 to run applications residing on server 2250. Client 2205 may do so through connection 2240. Connection 2240 may be, for example, a Wide Area Network, a Local Area Network, or the Internet. Server 2250 operates comparably to the above description of client 2205. The user interface features of the present invention may be found on either client 2205, server 2250, or a combination of the two devices.
The foregoing description of possible implementations consistent with the present invention does not represent a comprehensive list of all such implementations or all variations of the implementations described. The description of only some implementation should not be construed as an intention to exclude other implementations. Artisans will understand how to implement the invention in the appended claims in may other ways, using equivalents and alternatives that do not depart from the scope of the following claims. Moreover, unless indicated to the contrary in the preceding description, none of the components described in the implementations is essential to the invention.

## Claims

1. A user interface template for generating a computer user interface through which a user may perform a task, the user interface template including a window on a computer screen comprising:
a first pane displaying two or more view selection links, the first pane having one of the two or more view selection links selected by the user at any point in time;
a second pane displaying one content pattern selected from two or more content patterns, wherein the two or more content patterns are associated with the respective two or more view selection links and wherein the one content pattern selected is selected based on the selected one of the two or more view selection links; and
a third pane displaying one or more links to activities that are directly related to the one content pattern selected from the two or more content patterns but that are not directly related to the task.

2. The user interface template of claim 1, wherein the window further comprises:
a fourth pane displaying one or more links to context related information, wherein selecting one of the one or more links to context related information displays a second window displaying an application associated with the selected one of the one or more links to context related information, and further wherein context related information is information selected from related data objects and documents.

3. The user interface template of claim 2, wherein the fourth pane further comprises a search field for performing a search of structured and unstructured data and for returning the results of the search in a third window displaying the search results.

4. The user interface template of one of the preceding claims, wherein the content patterns are selected from a content pattern template.

5. The user interface template of claim 4, wherein the content pattern templates are selected from one of a selection view content pattern, an object selection content pattern, a factsheet view content pattern, a main view content pattern, and a master-detail view content pattern.

6. The user interface template of one of the preceding claims, wherein the third pane further comprises an expansion icon, the selection of which causes the toggling of the display of the one or more links to activities.

7. The user interface template of one of the preceding claims and claim 2, wherein the fourth pane further comprises an expansion icon, the selection of which causes the toggling of the display of the one or more links to context related information.

8. A system for generating a computer user interface through which a user may perform a task, the user interface template including a window on a computer screen including a first pane, a second pane, and a third pane, comprising:
a memory; and
a microprocessor in communication with the memory and programmed to:
display two or more view selection links in the first pane, the first pane having one of the two or more view selection links selected by the user at any point in time;
displaying one content pattern selected from two or more content patterns in the second pane, wherein the two or more content patterns are associated with the respective two or more view selection links and wherein the one content pattern selected is selected based on the selected one of the two or more view selection links; and
displaying, in the third pane, one or more links to activities that are directly related to the one content pattern selected from the two or more content patterns but that are not directly related to the task.

9. The system of claim 8, wherein the window further includes a fourth pane and wherein the microprocessor is further programmed to display in the fourth pane one or more links to context related information, wherein selecting one of the one or more links to context related information displays a second window displaying an application associated with the selected one of the one or more links to context related information, and further wherein context related information is information selected from related data objects and documents.

10. The system of claim 9, wherein the fourth pane further comprises a search field for performing a search of structured and unstructured data and for returning the results of the search in a third window displaying the search results.

11. The system of one of the preceding claims 8 to 10, wherein the content patterns are selected by a system developer from a content pattern template.

12. The system of claim 11, wherein the content pattern templates are selected from one of a selection view content pattern, an object selection content pattern, a factsheet view content pattern, a main view content pattern, and a master-detail view content pattern.

13. The system of one of the preceding claims 8 to 12, wherein the third pane further comprises an expansion icon, the selection of which causes the toggling of the display of the one or more links to activities.

14. The system of one of the preceding claims 8 to 13 and claim 9, wherein the fourth pane further comprises an expansion icon, the selection of which causes the toggling of the display of the one or more links to context related information.
